# EUROPÄISCHE PATENTSCHRIFT

(11) **EP 3 060 837 B1**
(45) Veröffentlichungstag und Bekanntmachung des Hinweises auf die Patenterteilung: **01.08.2018**
(21) Anmeldenummer: 14815225.9
(22) Anmeldetag: 22.10.2014
(51) Int. Cl.: B25B 13/50, F16L 37/098, F16L 33/00

(54) **ANSCHLUSSVERBINDER, SET AUS ANSCHLUSSVERBINDER UND LÖSEWERKZEUG**
CONNECTOR, SET COMPRISING CONNECTOR AND RELEASING TOOL
RACCORD, ENSEMBLE COMPOSÉ D'UN RACCORD ET D'UN OUTIL DE DÉMONTAGE

(30) Priorität: 22.10.2013 DE 102013017442
(43) Veröffentlichungstag der Anmeldung: 31.08.2016
(73) Patentinhaber: Voss Automotive GmbH, 51688 Wipperfürth (DE)
(72) Erfinder: KLEIN, Roland, 51688 Wipperfürth (DE); HEINRICHS, Eugen, 51645 Gummersbach (DE)
(74) Vertreter: Rebbereh, Cornelia
(86) Internationale Anmeldenummer: PCT/EP2014/002858
(87) Internationale Veröffentlichungsnummer: WO 2015/058857

(56) Entgegenhaltungen:
- DE-C1- 19 755 826
- FR-A1- 2 812 371
- US-A- 5 187 851
- US-A1- 2010 031 486
- US-A1- 2010 213 702

## Beschreibung

Die Erfindung betrifft einen Anschlussverbinder für Schlauch- und/oder Rohrleitungen, umfassend zumindest einen Muffenteil und zumindest einen Steckerteil, wobei der Steckerteil in eine Aufnahmeöffnung des Muffenteils einsteckbar oder eingesteckt ist und wobei zumindest ein Halteelement zum lösbaren Verrasten des Steckerteils in dem Muffenteil vorgesehen ist. Sie betrifft ferner ein Lösewerkzeug zum Lösen der Verbindung eines mit Halteelement versehenen Steckerteils und eines Muffenteils eines solchen Anschlussverbinders, wobei im verrasteten Zustand des Anschlussverbinders zwischen dem Muffenteil und einem auskragenden Flansch des Steckerteils ein Eingriffsspalt vorgesehen ist, ein Set aus Anschlussverbinder und Lösewerkzeug zum Lösen der Verbindung eines mit Halteelement versehenen Steckerteils und eines Muffenteils eines solchen Anschlussverbinders sowie ein Halteelement für einen Steckerteil eines solchen Anschlussverbinders.

Anschlussverbinder mit Steckerteil und Muffenteil sind in den unterschiedlichsten Ausführungsvarianten im Stand der Technik bekannt. Um den Steckerteil im Muffenteil zu sichern, ist es ebenfalls bekannt, Halteelemente zu diesem Zweck vorzusehen. Diese sind in unterschiedlichsten Ausgestaltungen bekannt. Gemäß der EP 0 999 398 B1 ist beispielsweise ein Steckverbinder für Schlauch- und/oder Rohrleitungen bekannt, der aus einem Muffenteil und einem Steckerteil besteht, wobei der Steckerteil mit einem Steckerschaft in eine Aufnahmeöffnung des Muffenteils eingesteckt wird. Das gesteckte Steckerteil wird gegen das Muffenteil über eine Umfangsdichtung abgedichtet sowie über eine Verriegelungseinrichtung gegen herausziehen arretiert. Innerhalb des Muffenteils ist ein hohlzylindrischer, axial in den eingesteckten Steckerschaft eingreifender Steckzapfen angeordnet. Die Umfangsdichtung ist in einer im radial zwischen dem Steckzapfen des Muffenteils und dem Steckerschaft liegenden Bereich gebildeten Ringkammer angeordnet. Die Verriegelungseinrichtung besteht aus zumindest zwei diametral gegenüberliegenden, sich axial in Löserichtung etwa parallel zur Steckachse erstreckenden, in radialer Richtung federelastischen Rastarmen des Steckerteils, wobei die Rastarme im eingesteckten Zustand jeweils eine in der Aufnahmeöffnung des Muffenteils gebildete Hinterschneidungsfläche formschlüssig hintergreifen. Die Verriegelungseinrichtung ist einteilig mit dem Steckerteil ausgebildet.

Aus der DE 8 604 217 U1 ist eine weitere Steckverbindung für Druckmittelleitungen, insbesondere zum Anschluss von Bremsleitungen an einen Bremsventilkörper, bekannt, die aus einem Gehäuse und einem in eine Anschlussbohrung des Gehäuses mit seinem Steckerschaft einsteckbaren Stecker mit Durchgangsbohrung besteht. Der Stecker ist mittels eines Halteelements in axialer Richtung gegen Verschieben gehalten und mittels einer zwischen Steckerschaft und Gehäuse angeordneten Umfangsdichtung abgedichtet. Ferner ist der Stecker gegenüber dem Gehäuse durch eine formschlüssige Verbindung gegen Verdrehen fixiert. Das Halteelement übergreift einerseits außenseitig das Gehäuse und dementsprechend auch den Stecker und greift andererseits innen in das Gehäuse ein und drückt Rastzungen in entsprechende Öffnungen in dem Gehäuse ein.

Aus der EP 2 224 156 A2 ist ein Steckverbinder für Medienleitungen bekannt, der einen Steckerteil umfasst, der mit einem Steckerschaft dichtend in eine Aufnahmeöffnung eines Verbindergegenstücks einsteckbar und über Rastmittel lösbar gegen Herausziehen arretierbar ist. Die Rastmittel bestehen aus zumindest zwei Rastarmen des Steckerteils, die sich zur Steckachse etwa parallel in Löserichtung erstrecken und in radialer Richtung federelastisch ausgebildet sind. Die Rastarme hintergreifen im eingesteckten Zustand jeweils eine innerhalb der Aufnahmeöffnung des Verbindergegenstücks vorhandene Raststufe form- oder kraftformschlüssig. Das Steckerteil ist mit den Rastarmen als einstückiges, monolithisches Formteil ausgebildet. Ferner ist ein Verriegelungselement vorgesehen, das derart beweglich mit dem Steckerteil verbunden ist, dass es in einer Sicherungsstellung die Rastmittel gegen Lösen blockiert und in einer Lösestellung für eine die Arretierung aufhebende Lösebewegung freigibt. Die Rastmittel sind ferner derart ausgebildet, dass in Einsteck- und Löserichtung unterschiedliche Kräfte zu überwinden sind. Ein solcher Steckverbinder wird bei Leckölleitungen verwendet und ist entsprechend demontierbar durch Angreifen an Endabschnitten der Rastarme, die aus dem Verbindergegenstück herausragen und benachbart zu dem Steckerteil angeordnet sind.

Aus der EP 1 106 896 B1 ist eine weitere Steckverbindung für Druckmittelleitungen bekannt, die aus einem Gehäuseteil und einem Steckerteil besteht, wobei der Steckerteil mit seinem Steckerschaft dichtend in eine Aufnahmeöffnung des Gehäuseteils eingesteckt und mittels eines separaten Halteelements mit in radialer Richtung elastisch beweglichen Haltemitteln lösbar arretiert werden kann. Dies geschieht dadurch, dass das Halteelement in einer Arretierstellung mit den Haltemitteln zwischen einer inneren Ringstufe in der Aufnahmeöffnung und einer äußeren Ringstufe des Steckerschafts sitzt, wobei das Halteelement derart in axialer Richtung zwischen einer Sicherungsstellung und einer Freigabestellung verschiebbar auf dem Steckerschaft sitzt, dass die Haltemittel in der Sicherungsstellung gegen eine radiale Lösebewegung blockiert und in der Freigabestellung für eine radiale Lösebewegung freigegeben werden. Zwischen dem Steckerteil und dem Halteelement ist ein Federelement so angeordnet, dass das Halteelement selbsttätig durch Federkraft in die Sicherungsstellung und gegen die Federkraft in die Freigabestellung gebracht werden kann. Es erfolgt somit eine axiale Montage und eine Demontage durch eine axiale Hebebewegung durch Angreifen an dem Halteelement mittels eines Löse- bzw. Hebewerkzeugs. Außer dem Halteelement ist somit auch das Vorsehen des Federelements erforderlich, um das gewünschte Arretieren zu ermöglichen.

Aus der FR 2930621 A1 ist eine weitere Ausführungsvariante eines Steckverbinders für eine Leckölleitung bekannt. Zum Verrasten sind bei dieser Lösung einerseits ein Halteelement, das den Steckerteil teilweise umgibt und andererseits ein zungenförmiges Verrastungselement vorgesehen, das in das Halteelement eingreift und dieses radial nach außen spreizt, um Rastnasen in entsprechende Rastflächen eingreifen und darin festhalten zu lassen.

Aus der DE 39 24 173 A1 ist eine Anschlussarmatur bestehend aus einem Anschlusselement, das eine Aufnahmebohrung für ein mit einem Befestigungswulst versehenes Rohrende und einen das Rohrende umgreifenden Dichtring aufweist, bekannt. Zu seiner Befestigung im Anschlusselement ist auf das Rohrende eine in die Aufnahmebohrung einsteckbare Buchse aufschiebbar, die einen in radialer Richtung elastisch verformbaren Bereich aufweist. Dieser ist in seiner Bohrung mit einer über den Befestigungswulst rastbaren Nut versehen und bildet ein in eine Nut im Anschlusselement eingreifendes Rastgesperre. Das Rohrende wird durch einfachen Steckvorgang mit dem Anschlusselement verbunden und durch Öffnen des Rastgesperres wieder gelöst.

Als schwierig erweist sich das Vorsehen eines lösbaren Anschlussverbinders besonders an Stellen, an denen nur ein geringer Platz zur Verfügung steht, wie an einer Batterie, da dort das Betätigen eines Lösewerkzeugs schwer fällt.
FR 2 812 371 A1 offenbart einen Anschlussverbinder, umfassend einen Muffenteil und einen Steckerteil, wobei der Steckerteil in eine Aufnahmeöffnung des Muffenteils einsteckbar ist und wobei ein Halteelement zum lösbaren Verrasten des Steckerteils in dem Muffenteil vorgesehen ist, wobei das Halteelement und der Steckerteil zweiteilig ausgebildet und das Halteelement radial aufweitbar und auf einem Aufnahmeabschnitt des Steckerteils verliersicher montierbar ist und zumindest einen Haltearm mit zumindest einer außenseitig auskragenden Haltenase aufweist, wobei der zumindest eine Haltearm ein freies Ende und ein am Halteelementkörper festes Ende aufweist und in radialer Richtung bezüglich des Steckerteils federelastisch bewegbar ist zum Verrasten der zumindest einen Haltenase an zumindest einer Verrastungsfläche des Muffenteils und Lösen von dieser. Der vorliegenden Erfindung liegt daher die Aufgabe zugrunde, einen Anschlussverbinder, insbesondere für Schlauch- und/oder Rohrleitungen, vorzusehen, bei dem eine Verrastungsposition und eine Löseposition von Steckerteil und Muffenteil eingenommen werden kann, wobei für ein Halteelement, das dem lösbaren Verrasten von Steckerteil und Muffenteil dient, nur ein geringer Platzbedarf erforderlich und dennoch ein sicheres Verrasten und Lösen möglich ist, wobei in der Verrastungsposition das Halteelement verliersicher angeordnet ist. Im Hinblick auf das Lösewerkzeug zum Lösen der Steckverbindung des Anschlussverbinders wäre das Vorsehen eines Werkzeugs wünschenswert, mittels dessen bei einer Verwendung des Anschlussverbinders beispielsweise in einer Batterie, also an einer Stelle, an der nur ein geringer Platz zum Betätigen des Lösewerkzeugs und für den Anschlussverbinder selbst zur Verfügung steht, dennoch ein einfaches und die Leitungen, an denen der Steckerteil und der Muffenteil endseitig angeordnet sind, beim Lösen der Steckverbindung des Anschlussverbinders schonendes Lösen möglich ist.

Die Aufgabe wird durch einen Anschlussverbinder nach Anspruch 1 gelöst. Weiterbildungen der Erfindung sind in den abhängigen Ansprüchen definiert. Dadurch wird ein Anschlussverbinder insbesondere für Schlauch- und/oder Rohrleitungen geschaffen, der einen Steckerteil und einen Muffenteil umfasst. Der Steckerteil ist im Bereich des Aufnahmeabschnitts von dem im Querschnitt c-förmigen Halteelement umgeben. Je nach der Längsspaltbreite des c-förmigen Halteelements wird dieses - bei ausreichend breitem Längsspalt - radial auf den Steckerteil aufgefügt, ansonsten axial auf den Steckerteil aufgefügt, und sitzt im Aufnahmeabschnitt. Letzterer ist vorteilhaft von auskragenden Abschnitten des Steckerteils, insbesondere von Flanschen, umgrenzt, so dass das Halteelement in axialer Richtung verliersicher, d.h. gegen unbeabsichtigtes Lösen gesichert, in dem Aufnahmeabschnitt gehalten werden kann. Zusätzlich kann zumindest eine Versatzstelle, insbesondere ein Absatz in dem Aufnahmeabschnitt ausgebildet sein, an dem sich das Halteelement mit einer entsprechend gegengleich ausgebildeten Versatzstelle, insbesondere einem Absatz abstützen bzw. mit dieser ineinandergreifen kann.

Zum Verrasten an der Verrastungsfläche des Muffenteils, insbesondere in einer umlaufenden Verrastungsnut des Muffenteils, die auf dessen Innenseite ausgebildet ist, weist das Halteelement Haltenasen auf. Es ist mit einem im Querschnitt c-förmigen Manschettenkörper versehen, der zumindest einen federelastisch bewegbaren Haltearm mit zumindest einer außenseitig daran angeordneten Haltenase umfasst. Der Manschettenkörper kann geschlossen oder durchbrochen ausgebildet werden und hält im Aufnahmeabschnitt des Steckerteils auf diesem klemmend fest. Die Haltearme erstrecken sich vorteilhaft in axialer Richtung des Halteelements bzw. parallel zur Steckachse des Steckerteils, also in Steckrichtung, und sind in radialer Richtung bezüglich des Steckerteils federelastisch bewegbar. Ein Lösen der verrasteten Position des Halteelements ist durch Angreifen des Lösewerkzeugs an dem jeweiligen freien Ende der federelastischen Haltearme des Halteelements möglich. Zu diesem Zweck ist das Lösewerkzeug, das zumindest in einem Abschnitt, insbesondere endseitig, gabelartig ausgebildet ist mit einer c-förmigen Öffnung versehen, die eine solche Öffnungsweite aufweist, dass sie, wenn sie an den freien Enden der Haltearme angreift, diese so weit in Richtung des Steckerteils drängt, dass die Haltenasen außer Eingriff mit der Verrastungsfläche im Muffenteil gelangen. Die C-Form der inneren Öffnung umfasst einen gerundeten Abschnitt, der einen solchen Radius aufweist, dass eine außenseitige Anlage an dem Halteelementkörper möglich ist, und zwei einander etwa gegenüberliegend vorgesehene gerade Abschnitte, die die Haltekanten umfassen bzw. bilden und etwa parallel zueinander angeordnet sind. Dadurch, dass die Haltekanten an der c-förmigen Öffnung des Lösewerkzeugs an den Führungsflächen haltend angreifen, hält sich das Lösewerkzeug an dem Halteelement fest und das Trennen des Steckerteils von dem Muffenteil kann durch Ziehen an dem Lösewerkzeug in Richtung des Steckerteils erfolgen. Ein Ziehen an den Leitungen, die endseitig mit dem Steckerteil bzw. dem Muffenteil versehen sind, ist daher nicht erforderlich, so dass diese und die Verbindung zu dem Steckerteil bzw. dem Muffenteil geschont werden kann. Die spezielle Ausgestaltung der Formgebung des Lösewerkzeugs im Bereich der c-förmigen Öffnung durch Vorsehen der Haltekanten, die an den Führungsflächen und/oder Führungsabschnitten des Halteelements angreifen, ist es möglich, dass das Lösewerkzeug an dem Steckerteil hängenbleibt und durch Angreifen an dem Lösewerkzeug und Zugbewegung in Richtung weg von dem Muffenteil Steckerteil mit Halteelement und Muffenteil voneinander getrennt werden können. Die Haltekante am Lösewerkzeug dient, im Unterschied zu den Hebelkanten der Lösewerkzeuge des Standes der Technik, beispielsweise der EP 1 106 896 B1 oder der DE 20 2005 011 401 U1, zum Festhalten des Lösewerkzeugs an dem Steckerteil bzw. Halteelement auf diesem und zugleich zum Zurückdrängen des zumindest einen Haltearms und dadurch zum Lösen der Verrastung der Haltenase(n) aus ihrer Verrastungsposition in dem Muffenteil. Es ist zumindest eine Führungsfläche und/oder zumindest ein Führungsabschnitt vorgesehen, jedenfalls zumindest ein Bereich an dem Halteelement bzw. von dessen Körper, der dem Angreifen und Führen des Lösewerkzeugs dient. Dieser Bereich kann als hierfür geeignet geformter Führungsabschnitt bzw. als zum Angreifen und Führen des Lösewerkzeugs geeignet angeordnete und geformte Führungsfläche ausgebildet sein.

Um zu ermöglichen, dass das Lösewerkzeug an die Haltearme des Halteelements gelangen kann, ist im verrasteten Zustand von Steckerteil mit Halteelement und Muffenteil der Eingriffsspalt vorgesehen. Zum Lösen greift das Lösewerkzeug mit seinem gabelförmigen Ende bzw. Teilabschnitt in den Eingriffsspalt zwischen dem Ende des Muffenteils und einem auskragenden Abschnitt, insbesondere Flansch, des Steckerteils ein und an den freien Enden der Haltearme an und drängt diese dabei in Richtung des Steckerteils. Das Lösewerkzeug kann Einlauframpen aufweisen, um das Einfädeln im Eingriffsspalt zum Umgreifen des Steckerteils und Angreifen an den freien Enden der Haltearme zu erleichtern.

Durch das Anordnen des Halteelements im Inneren des Muffenteils kann ein unbeabsichtigtes Lösen der Steckverbindung von Muffenteil und Steckerteil sicher verhindert werden. Ohne ein Lösewerkzeug ist das Halteelement von außen nicht betätigbar. Im Unterschied zum Stand der Technik stehen von dem Halteelement keine Teile nach außen ab, bei denen ein unbeabsichtigtes Betätigen drohen könnte. Ein weiterer Vorteil gegenüber dem Stand der Technik besteht darin, dass durch das Vorsehen des auf den Steckerteil aufsteckbaren Halteelements, das sich in dem Muffenteil bei Zusammenstecken von Steckerteil und Muffenteil verrastend festhält, ein Baukastensystem geschaffen werden kann, das eine sehr hohe Variantenvielfalt bietet. Gerade bei der Verschlauchung von Batterien kann sich dieser Baukasten- bzw. modulare Aufbau als sehr vorteilhaft erweisen, da eine große Vielfalt von unterschiedlichen Anschlussverbindern, die für den jeweiligen Anwendungsfall geeignet ausgebildet sind, auf einfache Art und Weise schaffen lässt. Hierbei kann stets das gleiche Halteelement auf unterschiedlichst geformte Steckerteile aufgeklipst werden, da es sich nachfolgend beim Zusammenfügen mit dem Muffenteil in diesem festhält. Aufgrund der im Vergleich zum Stand der Technik weniger komplexen Formgebung des Halteelements kann dieses nach der Herstellung besser entformt werden als die entsprechenden Halteeinrichtungen des Standes der Technik, da bei der Herstellung weniger Kerne im Herstellungswerkzeug, wie z.B. Spritzgusswerkzeug, vorgesehen werden müssen.

Vorteilhaft weist der Manschettenkörper des Halteelements zwei einander gegenüberliegend angeordnete Haltearme mit Haltenasen auf, wobei die Haltenasen an jeweils einem Haltearm im Bereich von dessen freiem Ende angeordnet sind, um durch Angreifen an dem freien Ende durch das Lösewerkzeug die Haltenasen außer Eingriff mit der Verrastungsfläche des Muffenteils zu bringen. Durch das Vorsehen zweier bezüglich des Steckerteils einander gegenüberliegend angeordneter Haltearme, ist ein besonders leichtes Angreifen durch den gabelförmigen Abschnitt des Lösewerkzeugs möglich. Die Haltekanten der inneren Öffnung des gabelförmigen Abschnitts des Lösewerkzeugs können dabei länger ausgebildet sein als dem halben Durchmesser des Steckerteils mit darauf aufgefügtem Halteelement entspräche. Hierdurch ist ein besonders sicheres Angreifen an den Haltearmen und zugleich ein Sicherstellen eines vollständigen Herabdrückens der freien Enden der Haltearme in Richtung des Steckerteils möglich.

Im verrasteten Zustand sind somit keine nach außen ragenden Ver- und Entriegelungselemente vorgesehen, im Unterschied zu dem vorstehend beschriebenen Stand der Technik, so dass auch bei einer großen Anzahl von Anschlussverbindern, die auf einem geringen Platz angeordnet werden sollen, diese sehr gut mit dem Halteelement ausgestattet werden können. Gerade bei Bündelleitungen kann der Anschlussverbinder daher sehr vorteilhaft als sogenannte fliegende Trennstelle, die ein Lösen der Steckverbindung jederzeit unter Zuhilfenahme des Lösewerkzeugs ermöglicht, eingesetzt werden. Dadurch, dass keine Öffnungs- bzw. Löseelemente vorgesehen sind, die durch Angreifen von Hand bedient werden müssen, um ein Lösen der Steckverbindung von Muffenteil und Steckerteil mit Halteelement zu bewirken, kann der Anschlussverbinder besonders gut gegen ein unbefugtes Öffnen geschützt werden. Ein bzw. das Lösewerkzeug ist für das Lösen der Verbindung erforderlich und erleichtert nicht nur die Demontage bzw. das Lösen der Teile voneinander, sondern kann auch die Montage erleichtern, wenn durch das Lösewerkzeug die Haltearme niedergedrückt werden, um einen einfachen und schnellen Eingriff der Haltenasen in eine entsprechende Verrastungsnut bzw. ein Hintergreifen der Verrastungsfläche im Muffenteil zu ermöglichen oder zu erleichtern.

Um insbesondere beim Versuch eines Angreifens des Lösewerkzeugs ein ungewolltes Verdrehen des Manschettenkörpers bzw. des Halteelements um den Steckerteil herum zu verhindern, ist zumindest eine Verdrehsicherung vorgesehen sein. Insbesondere weist der Steckerteil eine solche Verdrehsicherung für das Halteelement auf. Diese kann beispielsweise durch zumindest ein radial von dem Aufnahmeabschnitt zum Aufnehmen des Halteelements abstehendes Element gebildet werden. Dieses kann in eine Lücke zwischen den Enden des im Querschnitt c-förmigen Manschettenkörpers des Halteelements eingreifen und dadurch ein Drehen des Haltelements um die Steckerlängsachse herum verhindern. Ferner kann ein formschlüssiges Ineinandergreifen von zumindest einem abstehenden Element und zumindest einer Nut an der Außenseite des Steckerteils und der Innenseite des Maschettenkörpers des Halteelements als Verdrehsicherung vorgesehen sein. Als abstehende oder vorkragende Elemente eignen sich insbesondere Stege, die sich in Längsrichtung des Steckerteils erstrecken. Ferner kann die Verdrehsicherung beispielsweise auch durch zumindest einen abgeflachten Bereich, mit dem ein abgeflachter Bereich des Halteelements zusammenwirkt, gebildet sein. Auch Kombinationen der genannten Maßnahmen zum Verhindern eines Verdrehens des Halteelements gegenüber dem Steckerteil sind möglich.

Vorteilhaft ist zumindest eine axiale Abstützfläche für das Halteelement am Steckerteil vorgesehen. Hierüber kann eine Kraftübertragung von dem Halteelement auf das Steckerteil erfolgen.

Um einen besonders guten Halt der Haltekanten des Lösewerkzeugs im Bereich des Halteelements zu ermöglichen, weist dieses bzw. dessen Manschettenkörper benachbart zu dem zumindest einen Haltearm der zumindest eine Führungsabschnitt und/oder die zumindest eine Führungsfläche auf, also zumindest ein Bereich, der dem Führen des Lösewerkzeugs dient. Ein solcher bzw. solche sind in Form abgeflachter und/oder ausgetaschter Bereiche zum Führen des Lösewerkzeugs zum Lösen der Verbindung von Steckerteil mit Halteteil und Muffenteil ausgebildet. Das Lösewerkzeug wird somit von selbst zentriert und in die korrekte Position geführt und kann aufgrund des Vorsehens der abgeflachten bzw. ausgetaschten Bereiche benachbart zu dem zumindest einen Haltearm ausreichend weit den Haltearm in Richtung zu dem Steckerteil drücken, um die Verbindung von Steckerteil und Muffenteil zu lösen, also die Haltenasen außer Eingriff mit den Verrastungsflächen des Muffenteils zu bringen.

Der an dem Steckerteil vorgesehene Aufnahmeabschnitt zum Aufnehmen des Halteelements ist vorteilhaft an einem Ende von zumindest einem auskragenden Flansch begrenzt, der ebenfalls den Eingriffsspalt einseitig definiert und begrenzt. Auf der anderen Seite wird der Eingriffsspalt von der Endfläche des Muffenteils begrenzt. Das Halteelement wird vorteilhaft so in dem Aufnahmeabschnitt aufgenommen, dass das jeweilige freie Ende des zumindest einen Haltearms des Halteelements benachbart zu dem Flansch und nach dem Ineinanderfügen von Steckerteil und Muffenteil in dem Eingriffsspalt liegt. Dieser Flansch kann insbesondere ebenfalls als Anlagefläche für das Lösewerkzeug dienen, während dieses in den Eingriffsspalt eingreift. Die Öffnungsweite des Raums, der von dem zumindest einen Steg definiert wird, der die innere c-förmige Öffnung des gabelförmigen Abschnitts des Lösewerkzeugs zumindest teilweise, mit Abstand zu dieser umgibt, ist vorteilhaft so bemessen, dass diese etwas größer als der Außendurchmesser des Muffenteils ist, jedoch geringer als der Außendurchmesser des Flansches des Steckerteils. Der Flansch kann dadurch nicht umgriffen werden, jedoch der Muffenteil. Dies kann ebenfalls als Positionierhilfe für das Lösewerkzeug dienen, da dieses lediglich in einer Richtung in den Eingriffsspalt eingreifen und zu einem Lösen der Verbindung von Muffenteil und Steckerteil mit Halteelement führen kann.

Aufgrund des zweiteiligen Ausbildens des Steckerteils und des Halteelements ist es möglich, diese aus unterschiedlichen Materialien auszubilden, insbesondere den Steckerteil aus Metall und/oder Kunststoff, insbesondere Kunststoff mit einem Glasfaseranteil, und das Halteelement aus einem Metall und/oder Kunststoff. Insbesondere können Steckerteil und Halteelement aus Kunststoffen mit einem unterschiedlichen Glasfaseranteil bestehen, wobei der Glasfaseranteil des Halteelements geringer als der Glasfaseranteil des Steckerteils sein kann. Der Muffenteil kann ebenfalls aus einem Metall und/oder Kunststoff bestehen, insbesondere die Materialwahl an die beiden anderen Elemente angepasst sein. Beispielsweise ist es möglich, das Muffenteil aus Aluminium herzustellen. Ein solches eignet sich insbesondere zum Einlöten in eine Kühlplatte. Hierbei ist das Muffenteil als rotationssymmetrisches Drehteil ausgebildet. Dementsprechend ist das Halteelement auf dem Steckerteil angeordnet.

Durch das zweiteilige Ausbilden von Steckerteil und Halteelement ist eine geeignete unterschiedliche Materialwahl aller Komponenten des Anschlussverbinders möglich. Das Halteelement kann beispielsweise auch auf einfachen zerspanten Steckerteilkonturen verwendet werden. Der Muffenteil kann ebenfalls einfach ausgebildet werden durch Zerspanen, so dass keine Fräsarbeiten erforderlich sind. Aufgrund der vorteilhaften zweiteiligen Ausbildung von Steckerteil und Halteelement ist es möglich, das Halteelement sehr variabel einzusetzen, dieses insbesondere stets als ein und dasselbe Element auszubilden, das auf unterschiedlichste Arten von Steckerteilen aufgefügt werden kann. Je nach Anwendungsfall des Anschlussverbinders können auch Hochtemperaturwerkstoffe sowohl für den Steckerteil als auch das Halteelement als auch den Muffenteil verwendet werden. Das Ausbilden von Steckerteil, Halteelement und Muffenteil aus unterschiedlichen Materialien, insbesondere unterschiedlichen Kunststoffen führt ferner dazu, dass beispielsweise ein sog. Zündschnureffekt vermieden werden kann, also ein ungewolltes Fortschreiten eines Brandes o.ä. über den Anschlussverbinder hinweg. Durch die Verwendung unterschiedlicher Werkstoffe für Steckerteil, Halteelement und Muffenteil kann ein solcher Zündschnureffekt vermieden werden. Beispielsweise kann der Steckerteil zumindest in dem Aufnahmeabschnitt, in dem das Halteelement aufgefügt ist, aus Polyphenylensulfid (PPS), wie Fortron® 1140L4, das Halteelement beispielsweise aus einem glasfaserverstärkten Polyamid, wie PA12GF30, und der Muffenteil aus Aluminium ausgebildet werden. Selbstverständlich sind auch andere Materialpaarungen möglich. Bei Ausbilden des Steckerteils und des Halteelements aus einem glasfaserverstärkten Kunststoff erweist es sich weiter als vorteilhaft, den Steckerteil mit einem höheren Glasfaseranteil zu versehen als das Halteelement, da der Steckerteil zumeist höheren Kräften ausgesetzt wird als das Halteelement, das im Innern des Muffenteils nach dem Verrasten aufgenommen wird, und die Haltearme des Halteelements eine ausreichende Federelastizität aufweisen sollen, um durch das Lösewerkzeug betätigt bzw. ausgelenkt werden zu können.

Als weiter vorteilhaft erweist es sich, in einem Endbereich des Halteelements an dessen Innenseite zumindest eine Versatzstelle auszubilden zum Ineinandergreifen mit einer gegengleich ausgebildeten Versatzstelle des Steckerteils. Hierdurch ist ein noch stabilerer Halt des Halteelements an dem Steckerteil möglich, da ein weiterer axialer Anschlag geschaffen werden kann, an dem das Halteelement angreift. Der Aufnahmeabschnitt des Steckerteils kann dementsprechend eine gestufte Formgebung aufweisen, wobei sich das Halteelement an jeder der Stufen festhalten kann.

Durch das c-förmige Ausführen des Halteelements ist es möglich, dieses auch auf angeformte oder angeknetete oder angestauchte Rohrenden aufzubringen, auch wenn dort keine Verdrehsicherung vorgesehen ist. Da das Halteelement radial aufgebracht wird, ist auch bei derart umgeformten Rohrenden ein problemloses Auffügen des Halteelements zum Schaffen einer Verliersicherung nach dem Einfügen des entsprechend ausgebildeten Rohrendes in ein Muffenteil möglich. Werden verschiedenste Ausführungsvarianten von Anschlussverbindern bzw. Verteilern benötigt, besteht auch die Möglichkeit, einfache Ausführungsvarianten von diesen zu zerspanen, um sie zum Aufbringen des Halteelements geeignet auszubilden. Es kann hier im Prinzip eine Art Baukastensystem verwendet werden, wobei auch bei unterschiedlichster Ausführung der Anschlussverbinder bzw. Steckerteile stets ein Auffügen des Halteelements möglich ist, insbesondere nach Zerspanen einfacher Steckerteile, um sie zum Auffügen des Halteelements mit einem entsprechenden Aufnahmeabschnitt zu versehen.

Anstelle des Vorsehens eines radial von dem Aufnahmeabschnitt zum Aufnehmen des Halteelements abstehenden Elements, das sich axial parallel zur Längserstreckung des Steckerteils bzw. der Steckachse erstreckt und das eine Verdrehsicherung für das Halteelement darstellt, können auch anderweitige Verdrehsicherungen vorgesehen werden. Beispielsweise kann durch eine Querbohrung oder Fläche in der Kontur des Steckerteils für zerspante Steckerteile eine Verdrehsicherung beim Zerspanen geschaffen werden.

In jeder der Ausführungen ist nach der Montage von Steckerteil mit Halteelement und Muffenteil, also des Anschlussverbinders, eine Verliersicherung nicht nur für das Halteelement, das in dem Muffenteil aufgenommen ist, sondern auch für die Verbindung von Steckerteil mit Halteelement und Muffenteil gegeben, so lange, bis durch das Lösewerkzeug die Verbindung von Muffenteil und Steckerteil mit Halteelement wieder gelöst wird.

Durch das zweiteilige Ausbilden von Steckerteil und Halteelement ist es ferner möglich, das Halteelement bei Beschädigung auszutauschen. Dies ist bei den einteiligen Lösungen des Standes der Technik nicht möglich. Bei solchen Systemen des Standes der Technik muss bei einem Defekt der Steckerteil zusammen mit der Leitung ausgetauscht werden.

Der Steckerteil und auch der Muffenteil können mit unterschiedlichsten Arten von Schlauch- und Rohrleitungen oder Aggregaten verbunden werden und hierbei über unterschiedlichste Anschlussmöglichkeiten. Beispielsweise ist ein Schlauchanschluss unter Verwenden einer Schlauchschelle möglich, ein Aufstecken, also ein Verbinden über einen Steckverbinder, ein Aufdornen bei Verwenden einer Rohrleitung, wie einer Polyamid-Rohrleitung, eine stoffschlüssige Verbindung, wie bei einem Schweißadapter oder auch ein Anlöten von metallischen Rohrenden an einem metallischen Steckerteil.

Anstelle der Verwendung von Kunststoff kann das Halteelement auch aus einem Metall ausgeführt werden, um einen Anschlussverbinder, der für Hochtemperaturlösungen, wie im Abgasstrang eines Fahrzeugs, einsetzbar ist, zu schaffen. Alternativ oder zusätzlich können hierbei spezielle Hochtemperaturwerkstoffe sowohl für den Steckerteil als auch das Halteelement als auch den Muffenteil verwendet werden.

Um insbesondere dann, wenn der Anschlussverbinder Teil eines Bündels von Anschlussverbindern, insbesondere schlecht zugänglich ist, so dass ein Angreifen mit einem Lösewerkzeug zum Lösen der Verbindung von Muffenteil und Steckerteil mit Halteelement ohne Sichtkontakt oder im Wesentlichen ohne Sichtkontakt durchgeführt werden muss, erweist sich das Vorsehen einer Positionierhilfe für das Lösewerkzeug zum Angreifen an dem Anschlussverbinder und Eingreifen in den zum Lösen vorgesehenen Eingriffsspalt zwischen dem vorkragenden Flansch des Steckerteils und dem Ende des Muffenteils als sehr vorteilhaft. Eine solche Positionierhilfe kann dadurch ausgebildet werden, dass der Manschettenkörper des Halteelements außenseitig auskragende Elemente aufweist, die ein Angreifen des gabelförmigen Abschnitts des Lösewerkzeugs nur in einer einzigen Ausrichtung bzw. ggf. in zwei diametral gegenüberliegenden Positionierungen des Lösewerkzeugs ermöglicht. Eine Fehlpositionierung des Lösewerkzeugs kann dadurch verhindert werden. Die auskragenden Elemente sind insbesondere in dem Bereich am Manschettenkörper angeordnet, der benachbart zu den mit Haltenasen versehenen Haltearmen angeordnet ist. Durch das Verhindern eines Verdrehens des Halteelements gegenüber dem Steckerteil durch Vorsehen der Verdrehsicherung weist das Halteelement am Steckerteil eine definierte Lageorientierung und somit Positionierung auf, so dass das Lösewerkzeug bei Angreifen im Bereich der auskragenden Elemente stets die korrekte Positionierung bezüglich der Haltearme aufweist. Gegebenenfalls können die außenseitig auskragenden Elemente am Manschettenkörper, die als Positionierhilfe für das Lösewerkzeug dienen, visuell erfasst werden, z.B. bei Ausbilden in einer anderen Farbe, so dass sehr schnell und einfach durch das Lösewerkzeug der Eingriffsspalt zum Eingreifen des Lösewerkzeugs zum Lösen der Verbindung von Muffenteil und Steckerteil mit Halteelement aufgefunden und ein Lösen der Verbindung vorgenommen werden kann.

Das Lösewerkzeug greift jeweils zum Betätigen, d.h. Lösen der Verbindung von Muffenteil und Steckerteil mit Halteelement, radial in den zwischen dem Flansch des Steckerteils und dem Ende des Muffenteils gebildeten Eingriffsspalt ein, wobei der zumindest eine Haltearm des Halteelements über diesen Eingriffsspalt radial zugänglich ist. Die außenseitig auskragenden Elemente oder Vorsprünge des Manschettenkörpers können der Lagevorgabe für das Lösewerkzeug dienen, insbesondere zur Zentrierung des gabelförmigen Abschnitts des Lösewerkzeugs, der in den Eingriffsspalt eingreift. Grundsätzlich sind unterschiedlichste Lösewerkzeuge verwendbar, die ein Betätigen des zumindest einen Haltearms des Halteelements dahingehend ermöglichen, dass dieser radial in Richtung des Steckerteils gedrückt wird, um die zumindest eine Haltenase an dem Haltearm außer Eingriff mit einer Verrastungsfläche im Muffenteil zu bringen.

Durch das Vorsehen federelastischer Haltearme bzw. Federarme, die sich in Richtung des Steckerteils, also bezüglich des Halteelements nach innen verformen lassen, und des Vorsehens eines ausreichenden Raumes bzw. Abstandes zwischen den freien Enden der Haltearme und der Außenseite des Steckerteils im Bereich des Aufnahmeabschnitts für das Halteelement ist ein problemloses Lösen vermittels des Lösewerkzeugs möglich. Das Halteelement kann im übrigen Bereich seines Manschettenkörpers vergleichsweise spielfrei auf der Außenseite des Steckerteils im Bereich des Aufnahmeabschnitts für das Halteelement aufgenommen sein. In dem Eingriffsspalt kann an den freien Enden der federelastischen Haltearme des Halteelements zu deren Betätigung angegriffen werden. Wie bereits erwähnt, wird das Lösewerkzeug im Bereich seiner inneren Öffnung an Haltekanten geführt, die außenseitig an den Führungsflächen und/oder Führungsabschnitten des Halteelementkörpers benachbart zu den Haltearmen des Halteelements angreifen. Der die c-förmige Öffnung zumindest teilweise umgebende Steg des zumindest einen gabelförmigen Abschnitts des Lösewerkzeugs greift, wie bereits erwähnt, über den Muffenteil benachbart zu dem Eingriffsspalt hinweg, so dass insbesondere ein Abziehen des Steckerteils von dem Muffenteil oder umgekehrt nach dem Angreifen des gabelförmigen Abschnitts des Lösewerkzeugs an den Haltearmen des Halteelements und deren Anlegen bzw. Bewegen in Richtung des Aufnahmeabschnitts des Steckerteils möglich ist.

Anstelle zumindest zweier separater, diametral einander gegenüberliegender Haltearme können auch an ihren freien Enden miteinander verbundene Haltearme vorgesehen sein, die eine größere umfängliche Erstreckung bezüglich des Halteelements und entsprechend auch des Steckerteils aufweisen, um eine bessere Erreichbarkeit für das Lösewerkzeug vorzusehen. Ferner ist es möglich, lediglich einen Haltearm vorzusehen, der an seinem freien Ende mit einem Querarm versehen ist, um die Fläche für das Angreifen durch das Lösewerkzeug zu vergrößern und ein Entriegeln bzw. Lösen der Verrastung zu ermöglichen. Die Verbindung von zumindest zwei Haltearmen kann beispielsweise so vorgesehen werden, dass bei einem Angreifen des Lösewerkzeugs zum Lösen der Verbindung von Muffenteil und Steckerteil der verbindende Teil insbesondere nach außen ausweicht bzw. sich ausformt, um ein Bewegen der Haltearme im Eingriffsspalt in Richtung des Steckerteils bzw. dessen Aufnahmeabschnitt zu ermöglichen.

Ferner ist es möglich, zumindest ein Steckindikatormittel vorzusehen, mittels dessen es möglich ist, festzustellen, ob die Steckverbindung von Steckerteil und Muffenteil mit Halteelement bereits gelöst und nachfolgend wieder zusammengesteckt wurde. Dies kann bei kritische Medien führenden Anschlussverbindern relevant sein. Ein solches Steckindikatormittel kann beispielsweise als akustisches und/oder visuell wahrnehmbares Indikatormittel ausgebildet sein, wie z.B. durch zumindest einen zwischen Haltearm und Manschetten- bzw. Halteelementkörper des Halteelements gebildeten Steg, der beim Entriegeln des Haltearms aus der Verrastungsposition, also beim Bewegen des Haltearms nach innen in Bezug auf das Halteelement, bricht, was akustisch und durch den nachfolgend fehlenden Steg auch optisch, also visuell, wahrnehmbar ist. Der Steg kann z.B. auch farbig ausgebildet sein, um eine noch leichtere optische Kontrolle seiner Unversehrtheit zu ermöglichen.

Zur näheren Erläuterung der Erfindung werden im Folgenden Ausführungsbeispiele von dieser näher anhand der Zeichnungen beschrieben. Diese zeigen in:
- Figur 1: eine perspektivische Explosionsansicht eines erfindungsgemäßen Sets aus erfindungsgemäßem Anschlussverbinder und Lösewerkzeug,
- Figur 2a bis 2c: Seitenansichten und eine Draufsicht auf einen erfindungsgemäßen Steckerteil,
- Figur 3a bis 3e: Seitenansichten sowie Drauf- und Unteransichten eines erfindungsgemäßen Halteelements,
- Figur 4: eine Längsschnittansicht eines erfindungsgemäßen Muffenteils,
- Figur 5a: eine Längsschnittansicht eines erfindungsgemäßen mit Halteelement versehenen Steckerteils mit darauf verrastetem Muffenteil,
- Figur 5b: eine Seitenansicht des Anschlussverbinders gemäß Figur 5a,
- Figur 5c: eine Querschnittsansicht des Anschlussverbinders gemäß Figur 5b entlang der Linie A-A,
- Figur 6: eine perspektivische Ansicht des Steckerteils mit darauf verrastetem, hier lediglich gestrichelt dargestellten Muffenteil gemäß Figur 5a, 5b, 5c und mit erfindungsgemäßem Lösewerkzeug zum Lösen der verrasteten Verbindung von Muffenteil und Steckerteil mit Halteelement,
- Figur 7: eine perspektivische Ansicht des erfindungsgemäßen Anschlussverbinders gemäß Figur 6 mit zum Lösen in einen Eingriffsspalt eingesetztem Lösewerkzeug,
- Figur 8a und 8b: Draufsicht und Seitenansicht des Lösewerkzeugs gemäß Figur 1 bzw. Figur 6 und 7,
- Figur 9: eine perspektivische Ansicht einer alternativen Ausführungsform eines erfindungsgemäßen Halteelements,
- Figur 10: eine perspektivische Ansicht eines erfindungsgemäßen Anschlussverbinders mit dem Halteelement gemäß Figur 9,
- Figur 11: eine perspektivische Ansicht eines erfindungsgemäßen Lösewerkzeugs, das mit seiner c-förmigen Öffnung an dem Halteelement gemäß Figur 9 an dessen Haltearmen angesetzt ist,
- Figur 12: eine perspektivische Ansicht einer weiteren Ausführungsform eines erfindungsgemäßen Anschlussverbinders, versehen mit dem Halteelement nach Figur 9,
- Figur 13: eine perspektivische Explosionsansicht des Anschlussverbinders gemäß Figur 12,
- Figur 14: eine Seitenansicht eines mit Steckindikatoren versehenen erfindungsgemäßen Halteelements,
- Figur 15: eine perspektivische Teilansicht eines nicht erfindungsgemäßen Halteelements mit abstehenden Laschen an den freien Enden von Haltearmen und
- Figur 16: eine Skizze des Haltearm-Details eines nicht erfindungsgemäßen Halteelements in Verrastung an einer Verrastungsfläche eines Muffenteils und in gelöster Position, ohne und mit vorstehenden auskragenden Elementen.

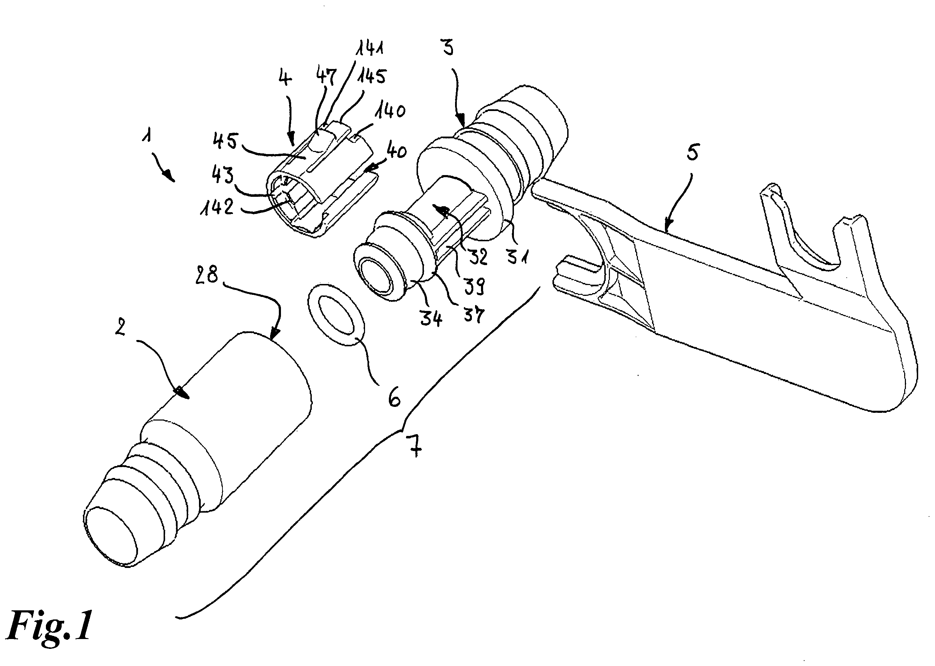

Figur 1 zeigt eine perspektivische Explosionsansicht eines Sets 1 umfassend einen Muffenteil 2, einen Steckerteil 3 und ein Halteelement 4, die zusammen einen Anschlussverbinder 7 bilden, sowie ein Lösewerkzeug 5. Ferner ist in Figur 1 ein Dichtring 6 gezeigt, der vor dem Verbinden von Steckerteil 3 und Muffenteil 2 auf den Steckerteil 3 endseitig aufgefügt wird, um eine dichtende Verbindung von Steckerteil und Muffenteil zu ermöglichen. Der Steckerteil 3 wird nach Auffügen des Halteelements 4 auf diesen in einer Aufnahmeöffnung 28 des Muffenteils 2 aufgenommen und dabei darin verrastet.

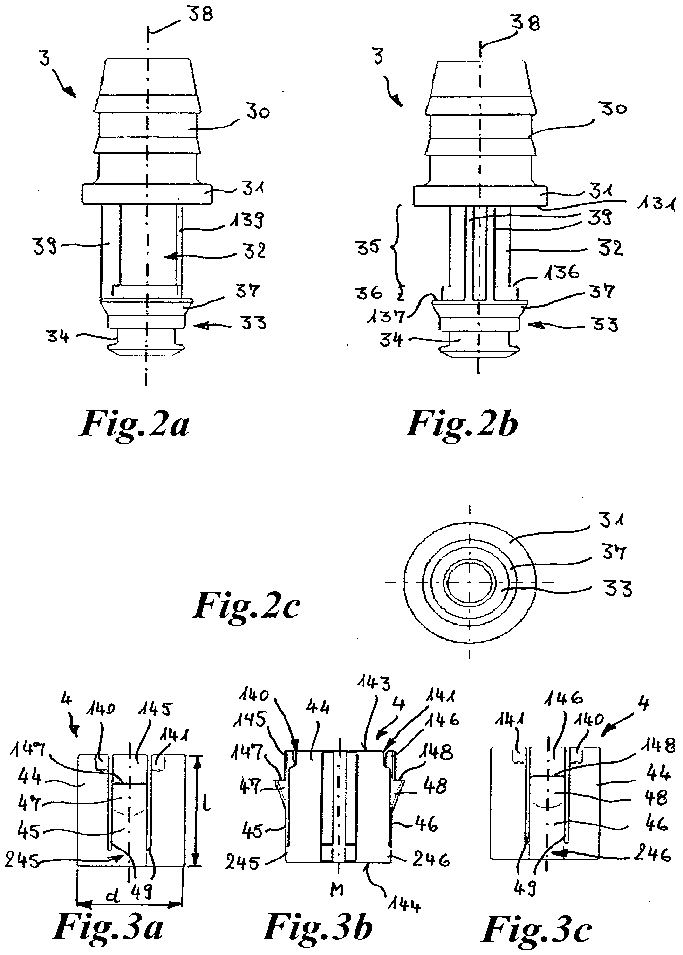

Wie besser den Detailansichten des Steckerteils in Figur 2a bis Figur 2c zu entnehmen ist, weist der Steckerteil 3 einen Anschlussabschnitt 30 auf, um dort eine Rohrleitung aufzudornen. Anstelle eines solchen Anschlussabschnitts 30, der zum Aufdornen insbesondere eines Polyamid-Rohres geeignet ist, kann auch ein Schlauchanschluss, der ein Verbinden mit einem Schlauch beispielsweise unter Zuhilfenahme einer Schlauchschelle ermöglicht, vorgesehen werden. Ferner ist es möglich, den Anschlussabschnitt 30 in Form eines Steckverbinders auszubilden und/oder geeignet, um eine stoffschlüssige Verbindung, beispielsweise über Verschweißen oder Verlöten, vorzusehen. An dem Anschlussabschnitt 30 kann nicht nur eine Schlauchleitung und/oder Rohrleitung direkt oder über einen Muffenteil angeschlossen werden, sondern ggf. auch andere medienleitende oder durchströmbare Einrichtungen, wie Aggregate.

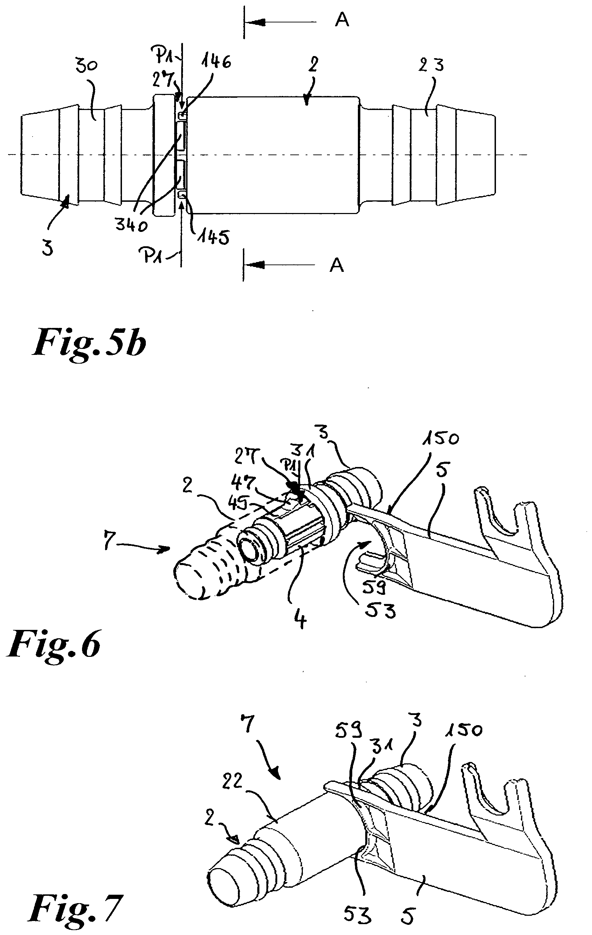

Der Anschlussabschnitt 30 ist durch einen auskragenden Flansch 31 von einem Aufnahmeabschnitt 32 zum Aufnehmen des Halteelements 4 abgegrenzt. Ein sich an dem Aufnahmeabschnitt 32 anschließender Endabschnitt 33 umfasst eine Nut 34 zum Aufnehmen des Dichtrings 6. Der Dichtring 6 liegt nach der Montage des Halteelements 4 an dem Steckerteil 3 unterhalb des Halteelements, wird also von diesem nach außen überdeckt. Der Aufnahmeabschnitt 32 ist gestuft ausgebildet, weist einen ersten inneren Abschnitt 35, der den vergleichsweise geringsten Durchmesser aufweist und bezüglich des Aufnahmeabschnitts 32 die größte Länge und einen zweiten Abschnitt 36 mit einem im Vergleich zum ersten Abschnitt 35 größeren Durchmesser, wobei der Durchmesser des zweiten Abschnitts 36 geringer ist als der des den Aufnahmeabschnitt 32 endseitig begrenzenden auskragenden Abschnitts 37. Somit ist es möglich, das in dem Aufnahmeabschnitt 32 aufgenommene Halteelement 4, wie in Figur 6 zu sehen, axial zwischen dem Flansch 31 bzw. dessen Axialfläche 131 und dem auskragenden Abschnitt 37 bzw. dessen Axialfläche 137 abzustützen und verliersicher zu halten. Unter "verliersicher" wird hier ein Sichern gegen ein unbeabsichtigtes Lösen verstanden. Die axialen Anlageflächen 131 und 137 dienen nicht nur der Positionierung des Halteelements 4, sondern auch dessen Fixierung und in Trennrichtung des Steckerteils 3 von dem Muffenteil 2 der Kraftübertragung.

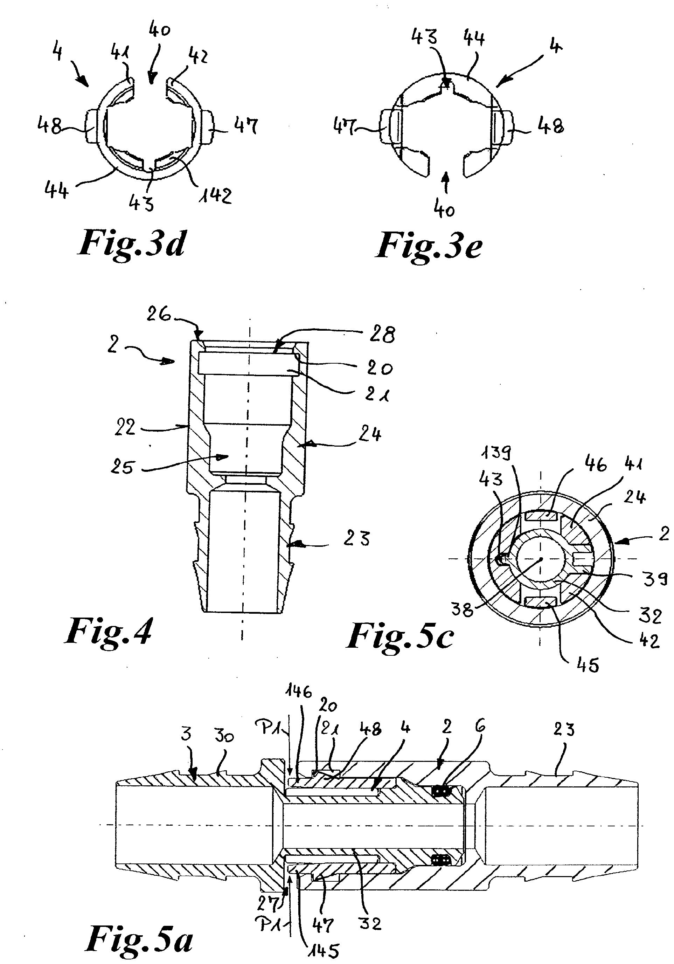

Wie insbesondere der Draufsicht auf das Halteelement in Figur 1 und Figur 3d zu entnehmen ist, weist dieses in seiner umlaufenden Wandung des Manschettenkörpers 44 in dem Bereich, der am zweiten Abschnitt 36 des Aufnahmeabschnitts 32 des Steckerteils 3 zur Anlage gebracht werden soll, eine geringere Wandstärke auf als im restlichen Manschettenkörper 44. Hierdurch wird eine axiale Anlagefläche 142 am Halteelement 4 geschaffen, die sich auf einer axialen Anlagefläche 136 des zweiten Abschnitts 36 abstützt. Das Halteelement 4 ist dadurch axial gegen Verschieben in dem Aufnahmeabschnitt 32 gesichert.

Zum Vorsehen einer Verdrehsicherung für das Halteelement nach dessen Aufnahme in dem Aufnahmeabschnitt 32 sind zwei sich in Längsrichtung, also parallel zur Steckerlängsachse 38 erstreckende Stege 39 vorgesehen. Dies ist auch in Figur 5c zu sehen. Anstelle zweier Stege kann auch ein breiterer Steg vorgesehen werden. Auch eine größere Anzahl von Stegen kann vorgesehen werden, wobei Sinn dieser Stege 39 ist, ein Verdrehen des Halteelementes 3 um die Steckerlängsachse 38 zu unterbinden. Dies geht besonders gut aus Figur 5c hervor. Das Radialspiel ist dabei sowohl zum Steckerteil als auch im Muffenteil vorteilhaft gering, so dass es beim Zusammenbau von Steckerteil mit Halteelement und Muffenteil höchstens zu einem geringen Verkippen kommen, jedoch in jeden Falle eine saubere Führung vorgesehen werden kann.

Wie insbesondere der Draufsicht und der Unteransicht des Halteelementes in den Figuren 3d und 3e sowie der perspektivischen Ansicht in Figur 1 zu entnehmen ist, ist dieses in der Draufsicht bzw. im Querschnitt etwa c-förmig. Hierdurch ist es möglich, das Halteelement 4 radial aufzuweiten und auf den Aufnahmeabschnitt 32 des Steckerteils 3 parallel zur Steckerlängsachse 38 radial aufzufügen . Der oder die Stege 39 werden nach dem Auffügen des Halteelementes 4 auf den Aufnahmeabschnitt 32 des Steckerteils 3 in einer Lücke 40, die aufgrund der C-Form des Halteelements 4 zwischen dessen Enden 41, 42 vorgesehen ist, aufgenommen. Dies ist in Figur 5c und 6 angedeutet, hier allerdings für ein Halteelement, das gegenüber dem in den Figuren 3a bis 3e gezeigten durch Vorsehen auskragender Elemente 340 endseitig an Haltearmen 45,46 modifiziert ist.

Wie den Figuren 3d und 3e weiter zu entnehmen ist, ist diametral gegenüberliegend zu der Lücke 40 eine Längsnut 43 am Manschettenkörper 44 ausgebildet. Diese dient der weiteren Fixierung des Halteelements 4 am Steckerteil 3 zum Schaffen einer Verdrehsicherung und fördert die Dehnbarkeit beim Aufweiten des Halteelements zum Positionieren desselben auf dem Steckerteil 3. Der Aufnahmeabschnitt 32 des Steckerteils 3 weist gegenüberliegend zu den Stegen 39 einen weiteren Steg 139 auf. Wie Figur 2a zu entnehmen ist, erstreckt sich der Steg 139 etwa gegenüberliegend zu den Stegen 39 bezüglich des Steckerteils 3 in dessen Längserstreckung.

Der Manschettenkörper 44 des Halteelements 4 umfasst zwei einander gegenüberliegend angeordnete Haltearme 45, 46 mit daran angeordneten Haltenasen 47, 48. Die Haltarme 45, 46 erstrecken sich in Längsrichtung des Halteelements, also nach Positionieren des Halteelements am Steckerteil 3 parallel zur Steckerlängsachse 38. Die Haltearme 45, 46 sind etwa senkrecht zu der Lücke 40 bzw. der Längsnut 43 am Manschettenkörper 44 ausgebildet. Dies kann insbesondere den Figuren 3d und 3e entnommen werden. Die Haltenasen 47, 48 sind in einer solchen Positionierung an den Haltearmen 45, 46 angeordnet, dass ihr einen Absatz bzw. Haken bildendes Ende 147, 148 in Richtung des jeweiligen freien Endes 145, 146 der beiden Haltearme 45, 46 weist. Mit diesem Ende 147, 148 greifen sie an der Verrastungsfläche 20 des Muffenteils 2 an (siehe Figur 5a).

Die Haltearme 45, 46 sind federelastisch an dem Manschettenkörper 44 angeordnet und durch Vorsehen von flankierenden Spalten 49 von dem restlichen Manschettenkörper 44 abgegrenzt. Dies kann insbesondere den Figur 3a und 3c, die jeweils Seitenansichten des Halteelements 4 zeigen, entnommen werden. Aus Figur 3b, die eine hierzu um 90 ° gedrehte Seitenansicht des Halteelements 4 zeigt, aufblickend auf die Lücke 40 zwischen den beiden Enden 41, 42 des Manschettenkörpers 44 des Halteelements 4, geht insbesondere hervor, dass die beiden einander gegenüberliegenden Haltearme 45, 46 mit ihren freien Enden 145, 146 leicht nach außen bezüglich des Manschettenkörpers 44 des Halteelements 4 abstehen, so dass die beiden Haltenasen 47, 48 in Eingriff mit zumindest einer Verrastungsfläche 20 einer Verrastungsnut 21 (siehe Figur 4 und 5a) gebracht werden können. Durch das federelastische Ausbilden der Haltearme 45, 46, die lediglich einseitig endseitig, gekennzeichnet durch die Bezugszeichen 245, 246, an dem Manschettenkörper 44 festgelegt sind, verrasten die Haltenasen 47, 48 automatisch nach dem Einfügen in die Verrastungsnut 21 des Muffenteils 2 in dieser bzw. an der Verrastungsfläche 20.

Das Halteelement 4 weist eine Länge l und einen Durchmesser d auf, wie in Figur 3a angedeutet, wobei vorzugweise l ≥ d ist, um eine gute Führung zu erzeugen und ein Verkippen sicher zu verhindern, selbstverständlich in Verbindung mit einem engen Spiel zum Muffenteil, also dessen Innendurchmesser. Mit seinen beiden axialen Endflächen 143, 144 liegt das Halteelement 4 an den beiden Axialflächen 131, 137 des Steckverbinders 3 an. Das Halteelement 4 kann dabei relativ spielfrei in den Aufnahmeabschnitt 32 eingepasst werden.

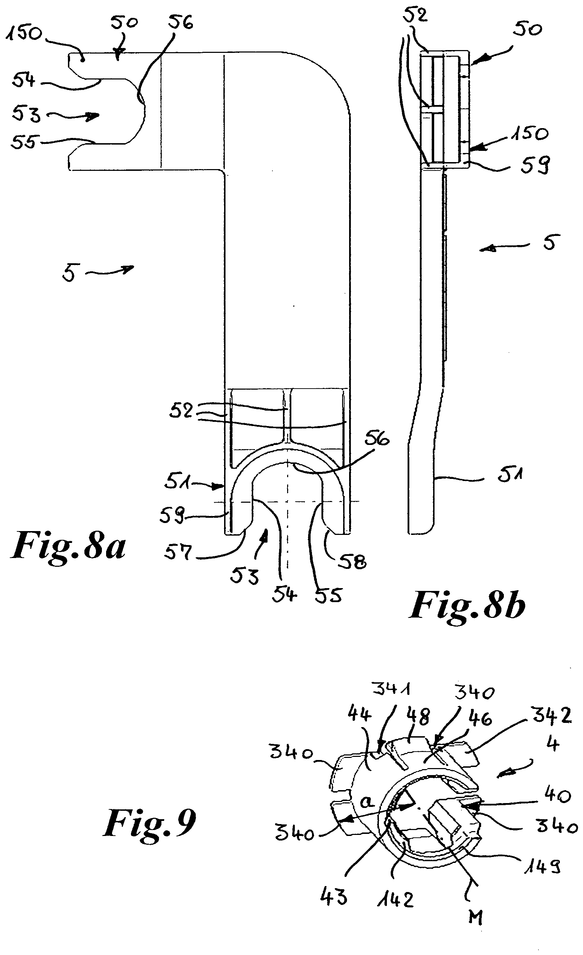

Um die Verrastungsverbindung von Haltenasen 47, 48 und Verrastungsnut 21 bzw. Verrastungsfläche 20 des Muffenteils 2 lösen zu können, ist das Lösewerkzeug 5 vorgesehen. Dieses ist im Detail in perspektivischer Ansicht der Figur 1 und in Draufsicht und Seitenansicht den Figur 8a und 8b zu entnehmen. Das Lösewerkzeug 5 ist, wie insbesondere Figur 8b zu entnehmen ist, im Wesentlichen flach und weist zwei gekröpfte gabelförmige Endabschnitte 50, 51 auf. In der Draufsicht ist das Lösewerkzeug,etwa L-förmig. Die beiden gekröpften gabelförmigen Abschnitte 50, 51 sind durch verschiedene Stege 52 verstärkt ausgebildet. Beide Abschnitte 50, 51 weisen jeweils eine Öffnung 53 auf, die zwei gerade Haltekanten 54, 55 und einen gekrümmten bogenförmigen Abschnitt 56 umfasst, der die beiden Haltekanten miteinander verbindet. Im endseitigen Bereich gehen die beiden geraden Haltekanten 54, 55 der Öffnung 53 der beiden gabelförmigen gekröpften Abschnitte 50, 51 in Einführkanten 57, 58, die sich konisch öffnen, über. Mit Abstand zu der inneren Öffnung 53 der beiden gekröpften gabelförmigen Abschnitte 50, 51 erstreckt sich parallel zu den beiden Haltekanten 54, 55 und den bogenförmigen Abschnitt 56 ein Steg 59. Dieser dient als Positionierhilfe und Anschlag. Er kann sich auf der Außenseite 22 des Muffenteils 2, wie in Figur 7 angedeutet, anlegen. Sobald der Steg 59 auf der Außenseite 22 des Muffenteils 2 anliegt, ist es korrekt positioniert, um ein Lösen der Verrastung der Haltenasen 47, 48 aus der Verrastungsnut 21 bzw. an der Verrastungsfläche 20 des Muffenteils 2 zu ermöglichen.

Zum Lösen der Rastverbindung zwischen den Haltenasen 47, 48 des Halteelements 4, das auf dem Steckerteil 3 angeordnet ist, und der Verrastungsnut 21 des Muffenteils 2 wird im Bereich der freien Enden 145, 146 der beiden Haltearme 45, 46 durch das Lösewerkzeug 5 mit dessen geraden Haltekanten 54, 55 der jeweiligen Öffnung 53 angegriffen. Das Lösewerkzeug greift dabei in den Eingriffsspalt 27 zwischen Steckerteil-Flansch und Muffenteil ein. Hierbei werden die freien Enden 145, 146 der beiden Haltearme 45, 46 in Richtung Steckerteil 3, also radial nach innen bezüglich des Halteelements 4 gedrückt. Dies ist in Figur 5a, 5b und Figur 6 durch Pfeile P1 angedeutet. Um die beiden geraden Haltekanten 54, 55 am Manschettenkörper 44 zu führen und zu halten, weist dieser in den jeweils zu den beiden Haltearmen 45, 46 bzw. dem diese flankierenden Spalt 49 benachbarten Bereichen zurückspringende abgeflachte Führungsabschnitte 140, 141 auf, dieFührungsflächen bilden bzw. aufweisen. Dies ist sowohl in den Figuren 3a und 3c als auch in Figur 3b zu sehen. In letzterer Figur ist ersichtlich, dass bei Angreifen der beiden geraden Haltekanten 54, 55 des jeweiligen gabelförmigen gekröpften Abschnitts 50, 51 des Lösewerkzeugs 5 diese an den Führungsabschnitten 140, 141 angreifen und entlang von diesen geführt werden und die freien Enden 145, 146 der Haltearme 45, 46, die von den beiden Führungsabschnitten 140, 141 (mit Abstand zu diesen) flankiert werden, so weit in Richtung des Inneren des Halteelements bzw. in Richtung des Steckerteils 3, auf dem das Halteelement angeordnet ist, gedrängt werden, dass die beiden Haltenasen 47, 48 außer Eingriff mit der Verrastungsfläche 20 der Verrastungsnut 21 des Muffenteils 2 gelangen (siehe auch Figur 5a).

Wie insbesondere den Figuren 6 und 7 zu entnehmen ist, kann durch das Vorsehen des Steges 59 an dem Lösewerkzeug 5 dieses sich einerseits mit seiner Außenfläche 150 an dem Flansch 31 des Steckerteils 3 anlegen und andererseits außenseitig an dem Muffenteil 2. Das Muffenteil 2 ist im Detail im Schnitt in Figur 4 und 5a gezeigt, in Figur 5b als Seitenansicht, in Figur 6 lediglich perspektivisch angedeutet und in Figur 7 perspektivisch zu sehen. Der Muffenteil 2 umfasst, ähnlich wie der Steckerteil 3, einen Anschlussabschnitt 23, der, wie dargestellt, als Anschlussabschnitt zum Verdornen bzw. Aufdornen einer Rohrleitung ausgebildet sein kann. Ebenfalls ist es möglich, den Anschlussabschnitt 23 als Schlauchanschluss und/oder Steckverbinderanschluss und/oder Adapter für eine stoffschlüssige Verbindung, wie beispielsweise einen Löt- oder Schweißadapter, auszubilden. Der Anschlussabschnitt 23 kann beispielsweise zum Einlöten in eine Kühlplatte ausgebildet sein. Ferner können sowohl der Steckerteil als auch der Muffenteil nicht nur als gerade Verbinder, sondern auch als Winkelverbinder und/oder Mehrfachverbinder ausgebildet sein, der mehr als zwei Anschlussenden aufweist. Der in Figur 4 und 5a gezeigte Muffenteil 2 umfasst außer dem Anschlussabschnitt 23 einen Muffenabschnitt 24, der die Aufnahmeöffnung 28 und die bereits genannte Verrastungsnut 21 mit Verrastungsfläche 20 aufweist. Im Innern 25 des Muffenabschnitts 24 des Muffenteils 2 erstreckt sich nach dem Verrasten des auf den Steckerteil 3 aufgefügten Halteelements 4 letzteres sowie der Aufnahmeabschnitt 32 des Steckerteils 3 zum größten Teil sowie der Endabschnitt 33 des Steckerteils 3 in diesem. Durch Anordnen des Dichtrings 6 am Endabschnitt 33 ist ein Abdichten zum Vermeiden eines Austritts von Medium aus dem durch Zusammenfügen und Verrasten von Steckerteil 3 und Muffenteil 2 geschaffenen Anschlussverbinder 7 möglich. Im verrasteten Zustand von Steckerteil 3 mit Halteelement 4 und Muffenteil 2 verbleibt zwischen dem Flansch 31 des Steckerteils 3 und der Endfläche 26 des Muffenabschnitts 24 der Eingriffsspalt 27, der in Figur 5a, 5b und 6 angedeutet ist. In diesen Eingriffsspalt 27 kann das Lösewerkzeug 5 mit seinen gabelförmigen Abschnitten 50, 51 eingreifen, um ein Lösen der Rastverbindung von Steckerteil mit Halteelement und Muffenteil zu ermöglichen. Dies ist, wie bereits erwähnt, in Figur 7 gezeigt.

Um eine Fehlpositionierung des Lösewerkzeugs 5 beim Versuch eines Lösens der Rastverbindung von Halteelement und Muffenteil möglichst zu vermeiden und umgekehrt den Lösevorgang bzw. das Auffinden der korrekten Positionierung für das Lösewerkzeug 5 am Halteelement 4 zu erleichtern, sind bei der Ausführungsform des Halteelements 4 gemäß Figur 9 bis 11 auskragende Elemente 340 vorgesehen, wie sie auch bereits in Figur 5b angedeutet sind. Bei der in Figur 9 gezeigten perspektivischen Ansicht des Halteelements 4 sind die vorstehend zu den in den Figuren 1 sowie 3a bis 3e und 6 gezeigten Merkmale des Halteelements 4 ebenfalls zu finden. Zusätzlich sind in dem Bereich des Manschettenkörpers 44 zwischen den Haltearmen 45, 46 vier auskragende Elemente 340 vorgesehen. Diese sind mit solchen Abmessungen versehen, dass ihr radialer Abstand a von einer gedachten Mittelachse M des Halteelements 4 größer ist als der Radius r des Muffenteils 2 im Bereich von dessen

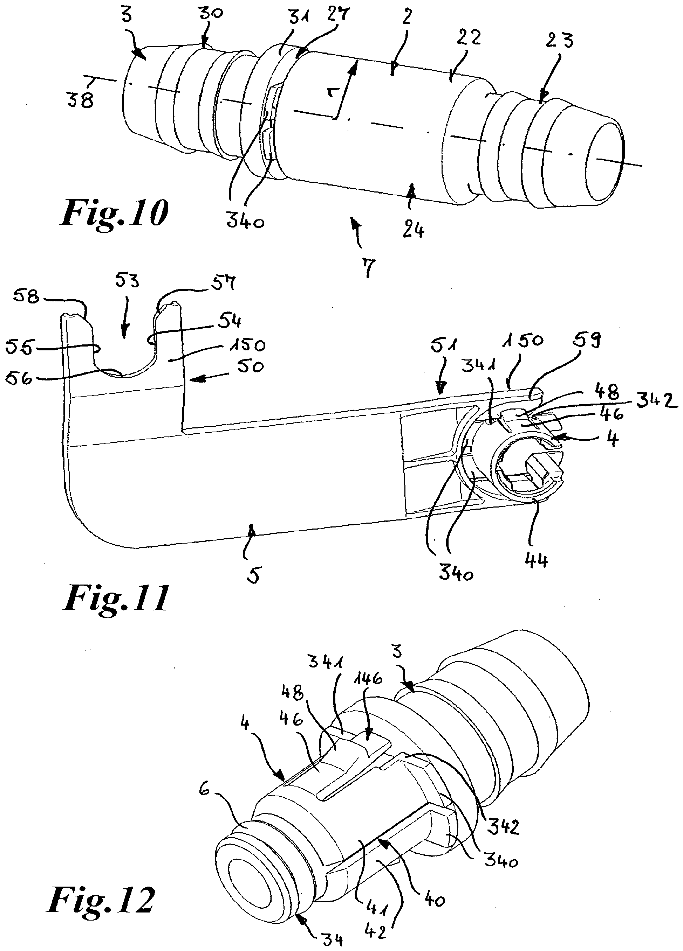

Muffenabschnitt 24. Daher ragen die vier auskragenden Elemente 340 über den Muffenteil 2 hinaus, was in Figur 10 angedeutet ist. Hierdurch sind sie von außen sichtbar und dadurch erkennbar, wo das Lösewerkzeug 5 durch den Eingriffsspalt 27 hindurch zu positionieren ist, da die freien Enden der Haltearme 45, 46 in etwa 90 ° zu den auskragenden Elementen 340 angeordnet sind, wie dies in Figur 11 angedeutet ist. Die auskragenden Elemente 340 stützen sich nach dem Positionieren des Lösewerkzeugs 5 an dessen Steg 59 ab, so dass hierdurch ein Endanschlag für die Löseposition des Lösewerkzeugs 5 gegeben ist. Das Lösewerkzeug liegt dann mit seinen Haltekanten 54, 55 haltend an Führungsflächen 341, 342 an, die sich in einem Teilabschnitt benachbart zu dem freien Ende 146 des Haltearms 46 an dem Manschettenkörper 44 und seitlich an den auskragenden Elementen 340 erstrecken. Die Führungsflächen 341, 342 entsprechen von ihrer Funktion her den Führungsabschnitten 140, 141 des Halteelements nach Figur 3a bis 3e, erstrecken sich lediglich seitlich am Manschettenkörper 44 und den auskragenden Elementen 340. Durch den Halt an den Führungsflächen 341, 342 unter gleichzeitigem Niederdrücken der freien Enden 145, 146 der beiden Haltearme 45, 46 hält das Lösewerkzeug 5 sich mit seinen Haltekanten 54, 55 an dem Halteelement 4 fest. Durch Ziehen an dem Lösewerkzeug in Richtung weg von dem Muffenteil 2 kann ohne Angreifen an einer mit Muffenteil 2 bzw. Steckerteil 3 verbundenen Leitung ein Trennen der Steckverbindung von Steckerteil und Muffenteil erfolgen. Dies erweist sich insbesondere bei Platzmangel an der Einbaustelle des Anschlussverbinders als vorteilhaft.

Gegebenenfalls können die auskragenden Elemente 340 farbig markiert sein, so dass diese noch leichter auch aus der Entfernung aufgefunden werden können. Die auskragenden Elemente dienen daher auch als Steckindikator, wobei sie im gesteckten Zustand des Anschlussverbinders den Spalt zwischen dem Flansch 31 und der Stirnseite des Muffenteils spielfrei ausfüllen können, wie in Figur 10 angedeutet. Gerade bei einem Bündel von Anschlussverbindern 7 lassen sich dadurch die jeweiligen Eingriffsspalte 27 für das Lösewerkzeug 5 ohne weiteres und schnell auffinden, da durch die auskragenden Elemente 340 eine Orientierungshilfe gegeben ist. Durch das Vorsehen eines endseitigen Bundes an dem Halteelement 4 kann eine falsche Montage von diesem wirkungsvoll verhindert werden, da dieser anderenfalls bei dem Versuch einer falschen Montage mit um 180 ° gedrehter Positionierung, was die Axialrichtung betrifft, im Wege wäre und so eine Montage verhindern kann.

Steckerteil 3, Muffenteil 2 und Halteelement 4 können aus unterschiedlichen Materialien bestehen, insbesondere aus Kunststoff und/oder Metall, wobei insbesondere auch ein faserverstärkter Kunststoff, wie ein glasfaserverstärkter Kunststoff verwendet werden kann. Bei Vorsehen eines glasfaserverstärkten Kunststoffs sowohl für den Steckerteil 3 als auch das Halteelement 4 eignet sich das Vorsehen eines höheren Glasfaseranteils für den Steckerteil als für das Halteelement. Der Muffenteil kann ebenfalls aus Kunststoff und/oder aus einem Metall bestehen, wie beispielsweise Aluminium. Insbesondere ist für alle Komponenten des Anschlussverbinders 7 die Verwendung von Hochtemperaturwerkstoffen möglich, um die Verwendungen bei hohen Temperaturen zu ermöglichen, wie im Abgasstrang eines Fahrzeugs.

Anstelle des Vorsehens auf einem Steckerteil 3, wie er in den vorstehend beschriebenen Figuren gezeigt ist, kann das Halteelement 4 auch direkt auf einem Rohrleitungsende verwendet werden, das entsprechend um- bzw. angeformt und/oder angeknetet und/oder angestaucht ist, um eine geeignete Formgebung unter Schaffen eines Aufnahmeabschnitts zum Aufnehmen des Halteelements vorzusehen. Durch den Aufnahmeabschnitt zum Aufnehmen des Halteelements kann eine axiale Verliersicherung für das Halteelement geschaffen werden. Das Vorsehen einer Verdrehsicherung, wie durch das Vorsehen von Stegen, wie den Stegen 39, 139, lässt sich bei derart angeformten bzw. umgeformten Rohrenden nur schwer verwirklichen, kann jedoch grundsätzlich dort ebenfalls vorgesehen werden. Beispielsweise können auch andere Arten von Verdrehsicherungen vorgesehen werden, wie kleine Querbohrungen und/oder Flächen bzw. abgeflachte Bereich an der Außenkontur der Rohrleitungsenden. Anstelle der Stege 39, 139 können auch an dem Steckerteil 3, wie es in den Figuren gezeigt ist, Querbohrungen und abgeflachte Bereiche vorgesehen werden, die ebenfalls eine Verdrehsicherung schaffen.

Figur 12 zeigt eine perspektivische Ansicht des mit dem Halteelement 4 versehenen Steckerteils 3 nach Figur 10, jedoch nach Entfernen des Muffenteils 2. Dementsprechend können die vorkragenden Elemente 340 des Halteelements 4 mit den seitlich vorgesehenen Führungsflächen 341, 342 zum Angreifen des Lösewerkzeugs 5 bzw. von dessen Haltekanten 54, 55 ebenso wie die Haltearme 45, 46 und der Spalt bzw. die Lücke 40 zwischen den beiden Enden 41, 42 des Halteelements 4 deutlich erkannt werden. Ferner ist der Dichtring 6 auf dem Steckerteil bzw. dessen Nut 34 montiert.

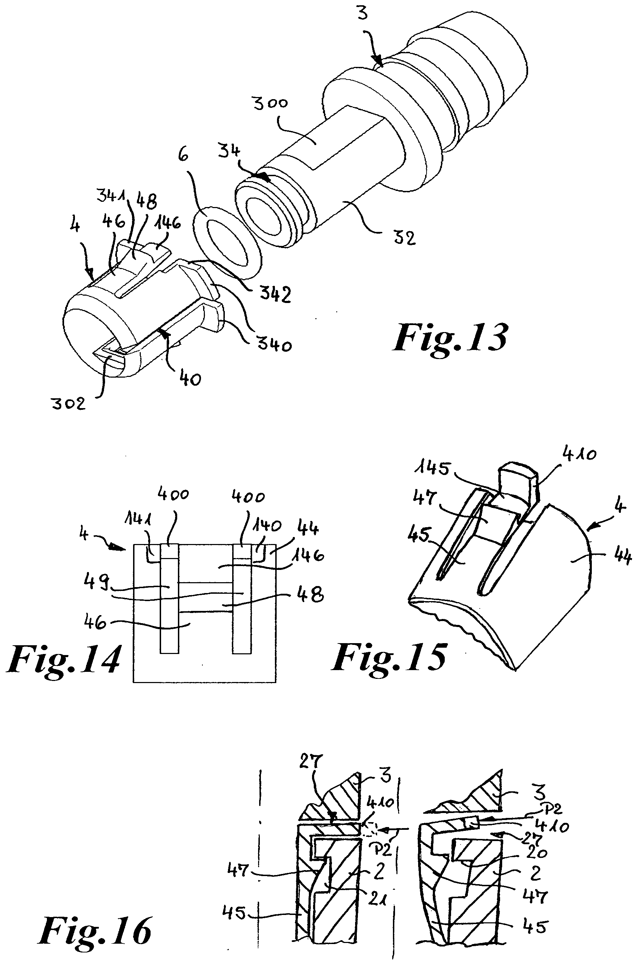

Wie Figur 13 entnommen werden kann, ist bei der Ausführungsvariante nach Figur 12 und Figur 13 an dem Steckerteil 3 kein Steg 39 zum Verhindern eines Rotierens des Halteelements 4 auf dem Steckerteil 3 vorgesehen, sondern vielmehr zwei einander gegenüberliegende abgeflachte Bereiche 300, die mit ebenfalls eben bzw. flach ausgebildeten auf der Innenseite des Halteelements 4 vorspringenden Elementen 302 ineinandergreifen. Hierdurch kann ebenfalls ein ungewolltes Verdrehen des Halteelements 4 gegenüber dem Steckerteil 3 in dessen Aufnahmeabschnitt 32 verhindert werden, da die Oberfläche des Elements 302 an dem abgeflachten Bereich 300 anliegt.

Alternativ zum Vorsehen zumindest eines Stegs oder abgeflachter Bereiche oder anderweitiger gegengleich ausgebildeter Elemente am Halteelement 4 und an dem Steckerteil 3 können auch noch andere Maßnahmen vorgesehen werden, um ein ungewolltes Verdrehen des Halteelements 4 auf dem Aufnahmeabschnitt 32 des Steckerteils 3 zu verhindern. Beispielsweise können anstelle der abgeflachten Bereiche andere geometrische Konturen, wie z.B. ein Polygon, ggf. auch in Abhängigkeit von der Anzahl an Haltearmen, vorgesehen werden. Insbesondere kann durch die Wahl der Kontur der Freiraum, der zum Eingreifen des Lösewerkzeugs und somit zum Lösen der Verbindung zur Verfügung gestellt wird, bestimmt werden.

Bei der in Figur 14 als Seitenansicht gezeigten Prinzipskizze des Halteelements 4 sind Steckindikatoren 400 in den beiden Spalten 49, die den Haltearm 46 flankieren, vorgesehen. Die Steckindikatoren 400 erstrecken sich dabei endseitig in den Spalten 49, benachbart zu den Enden des Haltearms 46 und des Manschettenkörpers 44, oder an einer Stelle entlang der Längserstreckung der Spalte 49. Die Steckindikatoren sind insbesondere als dünner verbindender Steg oder Filmscharnier ausgebildet. Über die Steckindikatoren 400, die zunächst mit den benachbarten Bereichen des Halteelements 4 verbunden sind, also mit dem jeweiligen Ende des jeweiligen Haltearms 45, 46 sowie dem Manschettenkörper 44 des Halteelements 4, brechen hörbar beim Aufweiten des Halteelements 4 ab, was zu einem zusätzlichen Steckgeräusch führt. Hierdurch wird also ein akustisch wahrnehmbares Signal erzeugt. Ferner können die Steckindikatoren farbig markiert sein, so dass deren Unversehrtheit sich auch visuell erkennen lässt. Auch über die noch vorhandene Durchgängigkeit des im Bereich der Steckindikatoren dann vorgesehenen umlaufenden Randes des Halteelements 4 kann deren Unversehrtheit visuell festgestellt werden dadurch, dass ein umlaufender Rand anstelle von einzelnen Segmenten erkennbar ist. Die Steckindikatoren 400 dienen insbesondere dazu, festzustellen, ob der Muffenteil 2 von dem Steckerteil 3 bereits abgezogen wurde oder nicht. Bei dem Versuch eines Lösens der Steckverbindung aus Muffenteil mit Halteelement und Steckerteil brechen die Steckindiaktoren beim Aufweiten des Halteelements durch Betätigen der Haltearme vermittels des Lösewerkzeugs 5 von den benachbarten Bereichen der Haltearme bzw. des Manschettenkörpers 44 ab, so dass dies während des Abbrechens akustisch und nachfolgend visuell erfasst werden kann. Außer dem Einfärben der Steckindikatoren können diese sich z.B. auch beim Brechen bzw. Abbrechen verfärben, so dass dies ebenfalls visuell erfassbar ist.

In Figur 15 ist eine perspektivische Ansicht eines anderen Halteelements gebrochen dargestellt. Dieses weist im Bereich seines Haltearms 45 ein etwa rechtwinklig von diesen endseitig abstehendes Laschenelement 410 auf. Der Figur 16, die im linken Teil das Detail einer Verrastungsposition des Halteelements 4 gemäß der Figur 15 in einem Muffenteil 2 zeigt und im rechten Teil eine Löseposition von diesem, kann ein Lösen des Halteelementes durch Aufbringen einer Kraft auf den Haltearm 45 durch Angreifen an dem Laschenelement 410 in Richtung des Pfeils P2 entnommen werden. Die Kraft wirkt dementsprechend aufgrund des etwa rechtwinkligen Anordnens des Laschenelements 410 zur Längserstreckung des Haltearms 45 etwa senkrecht auf den Haltearm 45 und kann diesen bzw. dessen Haltenase 47 daher aus der Verrastungsposition an der Verrastungsfläche 20 der Verrastungsnut 21 des Muffenteils 2 lösen. Dies ist im rechten Teil der Figur 16 so angedeutet.

Wie Figur 16 im linken Teil weiter entnommen werden kann, ragt nach dem Zusammenstecken von Steckerteil und Muffenteil mit Halteelement das Laschenelement 410 durch den Eingriffsspalt 27 hindurch über die äußere Erstreckung von Steckerteil und Muffenteil hinaus und kann dementsprechend von außerhalb betätigt werden. Dies ist in Figur 16 ebenfalls durch den Pfeil P2 angedeutet. Ferner ist es selbstverständlich auch möglich, dass das Laschenelement so ausgebildet ist, dass es bündig mit der äußeren Erstreckung von Steckerteil und/oder Muffenteil abschließt. Durch Angreifen mittels eines Lösewerkzeugs, insbesondere des Lösewerkzeugs 5, wie es in Figur 8a und 8b gezeigt ist, kann auch beim bündigen Abschließen des Laschenelements 410 mit der Außenseite von Steckerteil und Muffenteil ein Lösen der Steckverbindung von diesem erfolgen.

Das Lösewerkzeug 5 kann nicht nur zum Lösen der Verbindung von Steckerteil mit Halteelement und Muffenteil eingesetzt werden, sondern auch bei der Montage des Muffenteils auf dem Steckerteil, da durch Niederhalten der Haltearme 45, 46 des Halteelements 4 das Verrasten in der Verrastungsnut 21 des Muffenteils sehr viel leichter möglich ist als im nicht niedergehaltenen Zustand der Haltearme, wie er beispielsweise in den Figuren 3b und 9 gezeigt ist. Wie insbesondere den Figuren 7 und 10 zu entnehmen ist, wird durch das Vorsehen des Halteelements 4, aufgenommen auf dem Aufnahmeabschnitt 32 des Steckerteils 3, keine außenseitig auskragende Lösung einer lösbaren Steckverbindung geschaffen, in der das Halteelement verliersicher gehalten ist. Vielmehr stehen, im Unterschied zum Stand der Technik, keine Ver- oder Entriegelungselemente auf der Außenseite des Anschlussverbinders 7 über, die im Betrieb Gefahr laufen, abgetrennt zu werden, so dass nachfolgend kein Entriegeln mehr möglich wäre. Zum Lösen bzw. Entriegeln müssen die Öffnungselemente in Form der Haltearme mit daran angeordneten Haltenasen nicht manuell direkt betätigt werden, sondern unter Zuhilfenahme des Lösewerkzeugs, so dass die Gefahr eines unbefugten Öffnens oder auch die Gefahr eines versehentlichen Öffnens hierdurch deutlich vermindert werden kann.

Neben den im Vorstehenden beschriebenen und in den Figuren gezeigten Ausführungsvarianten von Anschlussverbindern, insbesondere für Schlauch- bzw. Rohrleitungen, die zumindest ein Muffenteil und zumindest ein Steckerteil umfassen, wobei der Steckerteil in eine Aufnahmeöffnung des Muffenteils eingesteckt wird und zumindest ein Halteelement zum lösbaren Verrasten des Steckerteils in den Muffenteil vorgesehen ist, können noch zahlreiche weitere geschaffen werden, auch Kombinationen der vorstehend genannten Ausführungsvarianten, bei denen jeweils Halteelement und Steckerteil zweiteilig ausgebildet sind und das Halteelement radial aufweitbar und auf einem Aufnahmeabschnitt des Steckerteils verlier- und verdrehsicher aufgenommen wird, wobei es radial oder axial dort aufgefügt wird, je nach dem Grad der Aufweitbarkeit des Halteelements, und zumindest einen Haltearm mit zumindest einer außenseitig auskragenden Haltenase aufweist, wobei sich der Haltearm etwa parallel zu der Steckachse des Steckerteils erstreckt und in radialer Richtung bezüglich des Steckerteils federelastisch bewegt werden kann, um die Haltenase mit einer Verrastungsfläche des Muffenteils in Verrastung zu bringen oder zu entriegeln. Zum geführten Angreifen eines Lösewerkzeugs an dem Halteelement zum Lösen der Verbindung von Steckerteil mit Halteelement und Muffenteil sind Führungsflächen und/oder Führungsabschnitte an dem Halteelementkörper benachbart zu dem freien Ende des zumindest einen Haltearms vorgesehen.

### Bezugszeichenliste

- 1: Set
- 2: Muffenteil
- 3: Steckerteil
- 4: Halteelement
- 5: Lösewerkzeug
- 6: Dichtring
- 7: Anschlussverbinder
- 20: Verrastungsfläche
- 21: Verrastungsnut
- 22: Außenseite
- 23: Anschlussabschnitt
- 24: Muffenabschnitt
- 25: Inneres
- 26: Endfläche
- 27: Eingriffsspalt
- 28: Aufnahmeöffnung
- 30: Anschlussabschnitt
- 31: Flansch
- 32: Aufnahmeabschnitt
- 33: Endabschnitt
- 34: Nut
- 35: innerer erster Abschnitt
- 36: zweiter Abschnitt
- 37: auskragender Abschnitt
- 38: Steckerlängsachse
- 39: Steg
- 40: Lücke
- 41: Ende
- 42: Ende
- 43: Längsnut
- 44: Manschettenkörper
- 45: Haltearm
- 46: Haltearm
- 47: Haltenase
- 48: Haltenase
- 49: Spalt
- 50: erster gekröpfter gabelförmiger Abschnitt
- 51: zweiter gekröpfter gabelförmiger Abschnitt
- 52: Steg
- 53: Öffnung
- 54: gerade Haltekante
- 55: gerade Haltekante
- 56: bogenförmiger Abschnitt
- 57: Einführkante
- 58: Einführkante
- 59: Steg
- 131: Axialfläche
- 136: axiale Anlagefläche
- 137: Axialfläche
- 139: Steg
- 140: zurückspringender abgeflachter Führungsabschnitt
- 141: zurückspringender abgeflachter Führungsabschnitt
- 142: axiale Anlagefläche
- 143: axiale Endfläche
- 144: axiale Endfläche
- 145: freies Ende
- 146: freies Ende
- 147: Absatz
- 148: Absatz
- 150: Außenfläche
- 245: festgelegtes Ende
- 246: festgelegtes Ende
- 300: abgeflachter Bereich
- 302: vorspringendes Element
- 340: auskragendes Element
- 341: Führungsfläche
- 342: Führungsfläche
- 400: Steckindikator
- 410: Laschenelement
- M: Mittelachse von 4
- a: Abstand
- r: Radius
- l: Länge von 4
- d: Durchmesser von 4
- P1: Pfeil
- P2: Pfeil

## Patentansprüche

1. Anschlussverbinder (7), insbesondere für Schlauch- und/oder Rohrleitungen, umfassend zumindest einen Muffenteil (2) und zumindest einen Steckerteil (3), wobei der Steckerteil (3) in eine Aufnahmeöffnung (28) des Muffenteils (2) einsteckbar oder eingesteckt ist und wobei zumindest ein Halteelement (4) zum lösbaren Verrasten des Steckerteils (3) in dem Muffenteil (2) vorgesehen ist, wobei das Halteelement (4) und der Steckerteil (3) zweiteilig ausgebildet und das Halteelement (4) radial aufweitbar und auf einem Aufnahmeabschnitt (32) des Steckerteils (3) verliersicher und verdrehsicher montierbar oder montiert ist und zumindest einen Haltearm (45,46) mit zumindest einer außenseitig auskragenden Haltenase (47,48) aufweist, wobei der zumindest eine Haltearm (45,46) ein freies Ende (145,146) und ein am Halteelementkörper (44) festes Ende (245,246) aufweist und in radialer Richtung bezüglich des Steckerteils (3) federelastisch bewegbar ist zum Verrasten der zumindest einen Haltenase (47,48) an zumindest einer Verrastungsfläche (20) des Muffenteils (2) und Lösen von dieser, und wobei zum geführten Angreifen eines Lösewerkzeugs (5) an dem Halteelement (4) zum Lösen der Verbindung von Steckerteil (3) mit Halteelement (4) und Muffenteil (2) zumindest ein Führungsabschnitt und/oder zumindest eine Führungsfläche (140,141,341,342) an dem Halteelementkörper (44) benachbart zu dem freien Ende (145,146) des zumindest einen Haltearms (45,46) vorgesehen sind, wobei der zumindest eine Führungsabschnitt und/oder die zumindest eine Führungsfläche des Halteelements (4) als abgeflachte und/oder ausgetaschte Bereiche (140,141,341,342) am Halteelementkörper (44) ausgebildet sind.

2. Anschlussverbinder (7) nach Anspruch 1,
**dadurch gekennzeichnet, dass**
in der Verrastungsposition von Steckerteil (3) mit Halteelement (4) und Muffenteil (2) zwischen Steckerteil (3) und Muffenteil (2) ein Eingriffsspalt (27) zum Eingreifen des Lösewerkzeugs (5) zum Angreifen an dem zumindest einen Haltearm (45,46) zum Lösen der zumindest einen Haltenase (47,48) aus der Verrastungsfläche (20) im Muffenteil (2) vorgesehen ist.

3. Anschlussverbinder (7) nach Anspruch 1 oder 2,
**dadurch gekennzeichnet, dass**
zwei einander gegenüberliegend angeordnete Haltenasen (47,48) vorgesehen sind.

4. Anschlussverbinder (7) nach einem der vorstehenden Ansprüche,
**dadurch gekennzeichnet, dass**
der Steckerteil (3) mit zumindest einer Verdrehsicherung (39,139) für das Halteelement (4) versehen ist, wobei die Verdrehsicherung durch zumindest ein radial von dem Aufnahmeabschnitt (32) zum Aufnehmen des Halteelements (4) abstehendes Element (39,139) gebildet ist.

5. Anschlussverbinder (7) nach einem der vorstehenden Ansprüche,
**dadurch gekennzeichnet, dass**
der Steckerteil (3) mit zumindest einer Verdrehsicherung (300) für das Halteelement (4) versehen ist, wobei die Verdrehsicherung durch zumindest einen abgeflachten Bereich (300), mit dem ein abgeflachter Bereich (302) des Halteelements (4) zusammenwirkt, gebildet ist.

6. Anschlussverbinder (7) nach einem der vorstehenden Ansprüche,
**dadurch gekennzeichnet, dass**
das Halteelement (4) an seiner Innenseite zumindest eine Versatzstelle (142) zum Ineinandergreifen mit einer gegengleich ausgebildeten Versatzstelle (136) des Steckerteils (3) aufweist.

7. Anschlussverbinder (7) nach einem der vorstehenden Ansprüche,
**dadurch gekennzeichnet, dass**
der Halteelementkörper (44) des Halteelements (4) außenseitig auskragende Elemente (340) zur Positionierhilfe beim Angreifen eines Lösewerkzeugs (5) zum Lösen der Verbindung des auf den Steckerteil (3) aufgefügten Halteelements (4) von dem Muffenteil (2) aufweist.

8. Anschlussverbinder (7) nach einem der vorstehenden Ansprüche,
**dadurch gekennzeichnet, dass**
zumindest eine axiale Abstützfläche (131,137) für das Halteelement (4) am Steckerteil (3) zur Kraftübertragung vorgesehen ist.

9. Anschlussverbinder (7) nach einem der vorstehenden Ansprüche,
**dadurch gekennzeichnet, dass**
die Führungsflächen des Halteelements (4) abgeflachte und/oder ausgetaschte Bereiche (341,342) an endseitig seitlich auskragenden Elementen (340) des Halteelementkörpers (44) sind, die sich in den Eingriffsspalt (27) hinein erstrecken.

10. Anschlussverbinder (7) nach einem der vorstehenden Ansprüche,
**dadurch gekennzeichnet, dass**
der Aufnahmeabschnitt (32) des Steckerteils (3) endseitig von auskragenden Abschnitten (31,37) von diesem begrenzt ist zum Umgrenzen des Aufnahmeabschnitts (32) für das Halteelement (4), insbesondere zumindest ein auskragender Flansch (31) im Bereich des freien Endes (145,146) des zumindest einen Haltearms (4) vorgesehen ist.

11. Anschlussverbinder (7) nach einem der vorstehenden Ansprüche,
**dadurch gekennzeichnet, dass**
der Steckerteil (3) und das Halteelement (4) aus unterschiedlichen Materialien bestehen, insbesondere der Steckerteil (3) aus Metall und/oder Kunststoff, insbesondere Kunststoff mit einem Glasfaseranteil, und das Halteelement (4) aus einem Kunststoff, insbesondere aus einem Kunststoff mit einem Glasfaseranteil, besteht, insbesondere der Steckerteil (3) einen höheren Glasfaseranteil als das Halteelement (4) aufweist.

12. Set (1) aus Anschlussverbinder (7) und Lösewerkzeug (5) zum Lösen der Verbindung eines mit Halteelement (4) versehenen Steckerteils (3) und eines Muffenteils (2) des Anschlussverbinders (7) nach einem der Ansprüche 1 bis 11,
**dadurch gekennzeichnet, dass**
Muffenteil (2) und Steckerteil (3) so ausgebildet sind, dass nach dem Ineinanderfügen von Muffenteil (2) und Steckerteil (3) mit Halteelement (4) ein Eingriffsspalt (27) zum Eingreifen des Lösewerkzeugs (5) verbleibt und letzteres zum Eingreifen in den Eingriffsspalt (27) in einem Abschnitt gabelförmig (50,51) mit zumindest einer c-förmigen Öffnung (53) ausgebildet ist, wobei die innere c-förmige Öffnung (53) so bemessen ist, dass beim Angreifen an dem Halteelement (4) sich Haltekanten (54,55) der inneren Öffnung (53) an zumindest einem Führungsabschnitt und/oder zumindest einer Führungsfläche (140,141,341,342) des Halteelementkörpers (44) benachbart zu Haltearmen (45,46) des Halteelements (4) festhalten und Haltenasen (47,48) der Haltearme (45,46) des Halteelements (4) so weit radial in Richtung des Steckerteils (3) bewegt werden, dass sie außer Eingriff mit einer Verrastungsfläche (20) des Muffenteils (2) gelangen.

13. Set (1) nach Anspruch 12,
**dadurch gekennzeichnet, dass**
mit Abstand zu der inneren c-förmigen Öffnung (53) zumindest ein diese zumindest teilweise umgebender Steg (59) als Positionieranschlag zum Anlegen auf der Außenseite (22) des Muffenteils (2) vorgesehen ist.

## Claims

1. A connector (7), in particular for hose lines and/or pipelines, comprising at least one sleeve part (2) and at least one insertion part (3), wherein the insertion part (3) is insertable or inserted into a receiving opening (28) of the sleeve part (2) and wherein at least one retaining element (4) is provided for releasably locking the insertion part (3) in the sleeve part (2),
wherein
the retaining element (4) and the insertion part (3) are formed in two parts and the retaining element (4) is radially expandable and is mountable or mounted on a receiving portion (32) of the insertion part (3) in a captive and rotationally fixed manner and has at least one retaining arm (45, 46) having at least one externally protruding retaining lug (47, 48), wherein the at least one retaining arm (45, 46) has a free end (145, 146) and an end (245, 246) fixed to the retaining element body (44) and is resiliently movable in the radial direction with respect to the insertion part (3) for the purpose of locking the at least one retaining lug (47, 48) on at least one locking surface (20) of the sleeve part (2) and releasing this retaining lug, and wherein at least one guide portion and/or at least one guide surface (140, 141, 341, 342) are provided on the retaining element body (44), adjacent to the free end (145, 146) of the at least one retaining arm (45, 46), for the purpose of applying a releasing tool (5) to the retaining element (4) in a guided manner for releasing the connection between the insertion part (3) with the retaining element (4) and the sleeve part (2), wherein the at least one guide portion and/or the at least one guide surface of the retaining element (4) are formed as flattened and/or pocket-shaped regions (140, 141, 341, 342) on the retaining body (44).

2. The connector (7) according to Claim 1,
**characterised in that**,
in the locking position of the insertion part (3) with the retaining element (4) and the sleeve part (2), an engagement gap (27) is provided between the insertion part (3) and the sleeve part (2) for engaging the releasing tool (5) for application to the at least one retaining arm (45, 46) for the purpose of releasing the at least one retaining lug (47, 38) from the locking surface (20) in the sleeve part (2).

3. The connector (7) according to Claim 1 or 2,
**characterised in that**
two mutually oppositely arranged retaining lugs (47, 48) are provided.

4. The connector (7) according to one of the preceding claims,
**characterised in that**
the insertion part (3) is provided with at least one anti-rotation means (39, 139) for the retaining element (4), wherein the anti-rotation means is formed by at least one element (39, 139) projecting radially from the receiving portion (32) for receiving the retaining element (4).

5. The connector (7) according to one of the preceding claims,
**characterised in that**
the insertion part (3) is provided with at least one anti-rotation means (300) for the retaining element (4), wherein the anti-rotation means is formed by at least one flattened region (300) with which a flattened region (302) of the retaining element (4) cooperates.

6. The connector (7) according to one of the preceding claims,
**characterised in that**
the retaining element (4) has, on its inside, at least one offset point (142) for mutually engaging with a diametrically opposed offset point (136) of the insertion part (3).

7. The connector (7) according to one of the preceding claims,
**characterised in that**
the retaining element body (44) of the retaining element (4) has externally protruding elements (340) to aid positioning when a releasing tool (5) is applied for releasing the connection between the retaining element (4) joined to the insertion part (3) and the sleeve part (2).

8. The connector (7) according to one of the preceding claims,
**characterised in that**
at least one axial supporting surface (131, 137) for the retaining element (4) is provided on the insertion part (3) for force transmission.

9. The connector (7) according to one of the preceding claims,
**characterised in that**
the guide surfaces of the retaining element (4) are flattened and/or pocket-shaped regions (341, 342) which protrude laterally at the ends of the retaining elements (340) of the retaining element body (44) and extend into the engagement gap (27).

10. The connector (7) according to one of the preceding claims,
**characterised in that**
the receiving portion (32) of the insertion part (3) is delimited at the ends by protruding portions (31, 37) of said insertion part for the purpose of defining the receiving portion (32) for the retaining element (4), in particular at least one protruding flange (31) is provided in the region of the free end (145, 146) of the at least one retaining arm (4).

11. The connector (7) according to one of the preceding claims,
**characterised in that**
the insertion part (3) and the retaining element (4) are made of different materials, in particular the insertion part (3) is made of metal and/or plastics material, in particular plastics material with a glass fibre content, and the retaining element (4) is made of a plastics material, in particular a plastics material with a glass fibre content, in particular the insertion part (3) has a higher glass fibre content than the retaining element (4).

12. A set (1) comprising a connector (7) and a releasing tool (5) for releasing the connection between an insertion part (3) provided with a retaining element (4) and a sleeve part (2) of the connector (7) according to one of Claims 1 to 11,
**characterised in that**
the sleeve part (2) and the insertion part (3) are formed such that, after joining the sleeve part (2) and the insertion part (3) with the retaining element (4), an engagement gap (27) for engaging the releasing tool (5) remains and, for engaging in the engagement gap (27), the releasing tool is formed in a fork shape (50, 51) in one portion, with at least one c-shaped opening (53), wherein the inner c-shaped opening (53) is dimensioned such that, when applied to the retaining element (4), holding edges (54, 55) of the inner opening (53) hold at least one guide portion and/or at least one guide surface (140, 141, 341, 342) of the retaining element body (44) adjacent to retaining arms (45, 46) of the retaining element (4), and retaining lugs (47, 48) of the retaining arms (45, 46) of the retaining element (4) are moved radially in the direction of the insertion part (3) to the extent that they move out of engagement with a locking surface (20) of the sleeve part (2).

13. The set (1) according to Claim 12,
**characterised in that**,
at a spacing from the inner c-shaped opening (53), at least one web (59) partially surrounding this opening is provided as a positioning stop for placement on the outside (22) of the sleeve part (2).

## Revendications

1. Raccord (7), en particulier pour tuyaux et/ou tubes, comprenant au moins une partie femelle (2) et au moins une partie mâle (3), dans lequel la partie mâle (3) peut être introduite ou est introduite dans un orifice de réception (28) de la partie femelle (2) et dans lequel au moins un élément de retenue (4) est prévu pour l'encliquetage amovible de la partie mâle (3) dans la partie femelle (2),
dans lequel l'élément de retenue (4) et la partie mâle (3) sont réalisés en deux parties et l'élément de retenue (4) peut être élargi radialement et peut être monté ou est monté de manière imperdable et anti-torsion sur une section de réception (32) de la partie mâle (3) et présente au moins un bras de retenue (45, 46) avec au moins un nez de retenue faisant saillie côté extérieur (47, 48), dans lequel l'au moins un bras de retenue (45, 46) présente une extrémité libre (145, 146) et une extrémité fixe (245, 246) sur le corps d'élément de retenue (44) et est mobile avec l'élasticité d'un ressort dans la direction radiale par rapport à la partie mâle (3) pour l'encliquetage de l'au moins un nez de retenue (47, 48) au niveau d'au moins une surface d'encliquetage (20) de la partie femelle (2) et le démontage de celui-ci, et dans lequel pour la préhension guidée d'un outil de démontage (5) au niveau de l'élément de retenue (4) pour le démontage de la liaison de la partie mâle (3) avec élément de retenue (4) et partie femelle (2), au moins une section de guidage et/ou au moins une surface de guidage (140, 141, 341, 342) sont prévues au niveau du corps d'élément de retenue (44) de manière adjacente à l'extrémité libre (145, 146) de l'au moins un bras de retenue (45, 46), dans lequel l'au moins une section de guidage et/ou l'au moins une surface de guidage de l'élément de retenue (4) sont réalisées en tant que zones aplaties et/ou échangées (140, 141, 341, 342) au niveau du corps d'élément de retenue (44).

2. Raccord (7) selon la revendication 1,
**caractérisé en ce que**
dans la position d'encliquetage de la partie mâle (3) avec élément de retenue (4) et partie femelle (2) entre partie mâle (3) et partie femelle (2), une fente de mise en prise (27) pour la mise en prise de l'outil de démontage (5) pour la préhension au niveau de l'au moins un bras de retenue (45, 46) pour le démontage de l'au moins un nez de retenue (47, 48) de la surface d'encliquetage (20) dans la partie femelle (2) est prévue.

3. Raccord (7) selon la revendication 1 ou 2,
**caractérisé en ce que**
deux nez de retenue (47, 48) agencés l'un en face de l'autre sont prévus.

4. Raccord (7) selon l'une quelconque des revendications précédentes,
**caractérisé en ce que**
la partie mâle (3) est dotée d'au moins une sécurité anti-torsion (39, 139) pour l'élément de retenue (4), dans lequel la sécurité anti-torsion est formée par au moins un élément (39, 139) faisant saillie radialement de la section de réception (32) pour la réception de l'élément de retenue (4).

5. Raccord (7) selon l'une quelconque des revendications précédentes,
**caractérisé en ce que**
la partie mâle (3) est dotée d'au moins une sécurité anti-torsion (300) pour l'élément de retenue (4), dans lequel la sécurité anti-torsion est formée par au moins une zone aplatie (300), avec laquelle une zone aplatie (302) de l'élément de retenue (4) coopère.

6. Raccord (7) selon l'une quelconque des revendications précédentes,
**caractérisé en ce que**
l'élément de retenue (4) présente au niveau de son côté intérieur au moins un point de décalage (142) pour l'engrènement avec un point de décalage (136) de la partie mâle (3) réalisé en sens opposé.

7. Raccord (7) selon l'une quelconque des revendications précédentes,
**caractérisé en ce que**
le corps d'élément de retenue (44) de l'élément de retenue (4) présente des éléments faisant saillie côté extérieur (340) pour l'aide au positionnement lors de la préhension d'un outil de démontage (5) pour le démontage de la liaison de l'élément de retenue (4) monté sur la partie mâle (3) de la partie femelle (2).

8. Raccord (7) selon l'une quelconque des revendications précédentes,
**caractérisé en ce que**
au moins une surface d'appui axiale (131, 137) pour l'élément de retenue (4) est prévue au niveau de la partie mâle (3) pour la transmission de force.

9. Raccord (7) selon l'une quelconque des revendications précédentes,
**caractérisé en ce que**
les surfaces de guidage de l'élément de retenue (4) sont des zones aplaties et/ou échangées (341, 342) au niveau d'éléments faisant saillie latéralement côté extrémité (340) du corps d'élément de retenue (44), qui s'étendent dans la fente de mise en prise (27).

10. Raccord (7) selon l'une quelconque des revendications précédentes,
**caractérisé en ce que**
la section de réception (32) de la partie mâle (3) est délimitée côté extrémité de sections faisant saillie (31, 37) par celle-ci pour la délimitation de la section de réception (32) pour l'élément de retenue (4), en particulier au moins un collet faisant saillie (31) est prévu dans la zone de l'extrémité libre (145, 146) de l'au moins un bras de retenue (4).

11. Raccord (7) selon l'une quelconque des revendications précédentes,
**caractérisé en ce que**
la partie mâle (3) et l'élément de retenue (4) sont constitués de différents matériaux, en particulier la partie mâle (3) est constituée de métal et/ou plastique, en particulier de plastique avec une part de fibre de verre, et l'élément de retenue (4) est constitué d'un plastique, en particulier d'un plastique avec une part de fibre de verre, en particulier la partie mâle (3) présente une part de fibre de verre plus élevée que l'élément de retenue (4).

12. Ensemble (1) composé d'un raccord (7) et d'un outil de démontage (5) pour le démontage de la liaison d'une partie mâle (3) dotée de l'élément de retenue (4) et d'une partie femelle (2) du raccord (7) selon l'une quelconque des revendications 1 à 11,
**caractérisé en ce que**
la partie femelle (2) et la partie mâle (3) sont réalisées de telle sorte qu'après l'emboîtement de la partie femelle (2) et de la partie mâlé (3) avec l'élément de retenue (4), il reste une fente de mise en prise (27) pour la mise en prise de l'outil de démontage (5) et ce dernier est réalisé pour la mise en prise avec la fente de mise en prise (27) dans une section en forme de fourche (50, 51) avec au moins un orifice en forme de c (53), dans lequel l'orifice intérieur en forme de c (53) est dimensionné de sorte que lors de la préhension au niveau de l'élément de retenue (4), des arêtes de retenue (54, 55) de l'orifice intérieur (53) s'agrippent à au moins une section de guidage et/ou au moins une surface de guidage (140, 141, 341, 342) du corps d'élément de retenue (44) de manière adjacente à des bras de retenue (45, 46) de l'élément de retenue (4) et des nez de retenue (47, 48) des bras de retenue (45, 46) de l'élément de retenue (4) sont déplacés radialement en direction de la partie mâle (3) jusqu'à ce qu'ils sont hors de prise avec une surface d'encliquetage (20) de la partie femelle (2).

13. Ensemble (1) selon la revendication 12,
**caractérisé en ce que**
à distance de l'orifice intérieur en forme de c (53), au moins une traverse (59) entourant celui-ci au moins en partie est prévue en tant que butée de positionnement pour l'application sur le côté extérieur (22) de la partie femelle (2).
